# EUROPEAN PATENT APPLICATION

(11) **EP 3 309 993 A1**
(43) Date of publication of application: **18.04.2018**
(21) Application number: 16891065.1
(22) Date of filing: 27.02.2016
(51) Int. Cl.: H04L 9/06

(54) **METHOD, DEVICE AND SYSTEM FOR PROCESSING VXLAN PACKET**

(71) Applicant: Huawei Technologies Co., Ltd., Longgang District Shenzhen, Guangdong 518129 (CN)
(72) Inventor: SHI, Lei, Shenzhen Guangdong 518129 (CN); ZHOU, Dongchen, Shenzhen Guangdong 518129 (CN)
(74) Representative: Pfenning, Meinig & Partner mbB
(86) International application number: PCT/CN2016/074770
(87) International publication number: WO 2017/143611

(57) **Abstract**

This application provides a method, device, and system for processing a VXLAN packet. The method includes: obtaining, by a controller, a request message for requesting allocation of a VNI, obtaining the VNI and a VXLAN security policy corresponding to the VNI according to the request message, and delivering the VNI and the VXLAN security policy corresponding to the VNI to a network device. In this way, when encapsulating a VXLAN packet, a network device used as a transmit end applies the corresponding VXLAN security policy according to the VNI to encrypt the VXLAN packet. Correspondingly, when decapsulating the VXLAN packet, a network device used as a receive end applies the corresponding VXLAN security policy according to the VNI to decrypt the encrypted VXLAN packet. During application of the method, device, and system in the embodiments of the present invention, encrypted data does not need to be configured at the transmit end and the receive end, and negotiation of a key and an algorithm does not need to be performed, so that configuration flexibility is improved, overheads of a packet header length and configuration complexity are reduced at the same time, and a broadcast function for the VXLAN packet is not affected.

## Description

### TECHNICAL FIELD

The present invention relates to communications technologies, and in particular, to encryption and decryption technologies in a process of processing a virtual extensible local area network (Virtual Extensible Local Area Network, VXLAN) packet.

### BACKGROUND

A VXLAN may be applied to a data center to enable a virtual machine to migrate in a network range of three interconnected layers without the need of changing an Internet Protocol (Internet Protocol, IP) address and a Media Access Control (Media Access Control, MAC) address, so as to ensure service continuity.

However, the VXLAN lacks a security assurance mechanism. As a result, a VXLAN packet may be intercepted and parsed during transmission. In Internet Protocol Security (Internet Protocol Security, IPSec) protocols, an encrypted security service may be used to ensure confidential and secure communication on an IP network. IPSec provides protection between two hosts, between two security gateways, or between a host and a security gateway. The Internet Key Exchange (Internet Key Exchange, IKE) protocol is an application layer protocol on the User Datagram Protocol (User Datagram Protocol, UDP), is a signaling protocol of IPSec, and provides services such as automatic key negotiation and exchange and security association establishment to IPSec, thereby greatly simplifying configuration and maintenance work of IPSec. In the prior art, a VXLAN packet is encrypted by using IPSec. For example, the VXLAN packet is encrypted by using the Encapsulating Security Payload (Encapsulating Security Payload, ESP) protocol of IPSec, so as to ensure transmission security of the VXLAN packet.

However, during actual application, encrypting the VXLAN packet by using IPSec has the following problems: Encrypted data needs to be separately configured at a transmit end and a receive end of a VXLAN packet, and a key and an algorithm need to be negotiated, resulting in reduced configuration flexibility. IPSec is used, and therefore an IPSec header needs to be added. As a result, overheads of a packet header length and configuration complexity are increased. In addition, after being encrypted by using IPSec, a VXLAN packet cannot be broadcast.

### SUMMARY

In view of this, embodiments of the present invention provide a method, device, and system for processing a VXLAN packet, so as to implement more flexible and simpler technologies of encrypting and decrypting a VXLAN packet.

Technical solutions provided in the embodiments of the present invention are as follows:
According to a first aspect, an encryption method for processing a VXLAN packet is provided. The method includes: obtaining, by a controller, a request message (for example, the request message may be from an APP device, or may be from a network device connected to the controller, or may be from the controller) for requesting allocation of a VXLAN network identifier (VXLAN Network Identifier, VNI), where the request message carries property information of the network device (for example, the property information includes an IP address or a MAC address of the network device, or may include interface information of the network device and/or capability information of the network device); obtaining the VNI according to the property information carried in the request message, and obtaining a VXLAN security policy corresponding to the VNI (for example, the VXLAN security policy is directly configured on the controller, or the VXLAN security policy is automatically generated according to a policy rule, or a combination thereof; the VXLAN security policy may be configured before the VNI is obtained or before the request message is obtained, or the VXLAN security policy may be configured when the VNI is being obtained or after the VNI is obtained), where the VXLAN security policy is used to encrypt a VXLAN packet carrying the VNI; and then sending the VNI and the VXLAN security policy to the network device.

Based on the solution provided in this embodiment, the controller implements centralized configuration and deployment of a VXLAN security policy, encrypted data does not need to be configured at a transmit end and a receive end, and negotiation of a key and an algorithm does not need to be performed, so that configuration flexibility is improved. Moreover, the VXLAN packet is encrypted based on the VXLAN security policy, and no new packet header needs to be added. In comparison with an IPSec encryption manner, overheads of a packet header length and configuration complexity are reduced, and a broadcast function for the VXLAN packet is not affected.

Optionally, the request message further includes a VXLAN security policy identifier, the VXLAN security policy identifier is used to indicate the VXLAN security policy, and the controller obtains the VXLAN security policy corresponding to the VNI according to the VXLAN security policy identifier.

Optionally, the VXLAN security policy identifier includes a VXLAN security policy number, a security level identifier, or a policy type identifier.

An implementation of indicating the VXLAN security policy by using the VXLAN security policy identifier achieves the following beneficial effect: Based on centralized configuration and deployment of a VXLAN security policy, VXLAN security policies of different security levels are allocated to users having different security level requirements, so as to adapt to security requirements of different users. Deployment of a VXLAN security policy including a security level or a policy type may be initiated by the controller or may be initiated by the network device.

Optionally, before the obtaining, by the controller, the VNI according to the property information carried in the request message, and obtaining a VXLAN security policy corresponding to the VNI, the controller automatically generates the VXLAN security policy according to a preset policy rule. For example, when the controller performs network planning, the VXLAN security policy is configured, and there may be one or more VXLAN security policies.

Optionally, the controller obtains the VNI according to the property information carried in the request message, and automatically generates the VXLAN security policy according to the request message and based on the preset policy rule, so as to obtain the VXLAN security policy corresponding to the VNI. For example, the request message carries the security level identifier, and the controller may automatically generate the VXLAN security policy according to a requirement of the security level identifier in the request message.

Optionally, the VXLAN security policy includes policy authentication data or a policy authentication algorithm identifier, and the policy authentication algorithm identifier is used to indicate an algorithm for generating the policy authentication data. An implementation of using policy authentication data achieves the following beneficial effect: The network device verifies integrity of the VXLAN security policy according to the policy authentication data. The network device at the transmit end and the network device at the receive end may verify, according to the policy authentication data, that VXLAN security policies used for encryption and decryption are consistent. In addition, use of the policy authentication algorithm identifier further facilitates reduction of processing overheads of the controller.

Optionally, the VXLAN security policy includes a key or a key generation algorithm identifier, and the key generation algorithm identifier is used to indicate an algorithm for generating the key.

Optionally, the VXLAN security policy further includes an encryption algorithm identifier, and the encryption algorithm identifier is used to indicate an algorithm for generating a ciphertext.

Optionally, the VXLAN security policy further includes an encryption range identifier, and the encryption range identifier is used to indicate content for generating a ciphertext.

Optionally, after the sending, by the controller, the VNI and the VXLAN security policy to the network device, the method further includes: updating, by the controller, the VXLAN security policy, where the updating the VXLAN security policy includes updating all content of the VXLAN security policy or updating partial content of the VXLAN security policy. The implementation achieves the following beneficial effect: The controller may flexibly deploy the VXLAN security policy, and network traffic overheads are reduced by updating partial content.

Optionally, the controller is an SDN controller.

According to a second aspect, an encryption method for processing a VXLAN packet is provided. The method includes: receiving, by a first network device, a VNI from a controller and a VXLAN security policy corresponding to the VNI; encrypting, according to the VXLAN security policy, a VXLAN packet carrying the VNI, to obtain an encrypted VXLAN packet, and setting an encryption flag bit carried in the encrypted VXLAN packet; and then sending the encrypted VXLAN packet to a second network device, where the first network device and the second network device are located in a virtual network indicated by the VNI. An operation of setting the encryption flag bit and an operation of encrypting the VXLAN packet are not in a specific order.

Based on the solution provided in this embodiment, a network device encrypts the VXLAN packet based on the VXLAN security policy delivered by the controller, and negotiation of a key and an algorithm does not need to be performed between network devices that are used as a transmit end and a receive end, so that configuration flexibility is improved. The VXLAN packet is encrypted based on the VXLAN security policy. In comparison with an IPSec encryption manner, overheads of a packet header length and configuration complexity are reduced, and a broadcast function for the VXLAN packet is not affected.

Optionally, before the encrypting, by the first network device according to the VXLAN security policy, a VXLAN packet carrying the VNI, to obtain an encrypted VXLAN packet, the method further includes: determining, by the first network device, that the VXLAN security policy carries policy authentication data, where the policy authentication data is used to verify integrity of the VXLAN security policy; and the encrypted VXLAN packet sent to the second network device carries the policy authentication data.

Optionally, before the encrypting, by the first network device according to the VXLAN security policy, a VXLAN packet carrying the VNI, to obtain an encrypted VXLAN packet, the method further includes:
determining, by the first network device, that the VXLAN security policy carries a policy authentication algorithm identifier, and generating policy authentication data according to the policy authentication algorithm identifier, where the policy authentication data is used to verify integrity of the VXLAN security policy; and the encrypted VXLAN packet sent to the second network device carries the policy authentication data.

An implementation of determining, by the first network device, whether the policy authentication data is carried achieves the following beneficial effect: The first network device may determine the integrity of the VXLAN security policy according to the policy authentication data, so as to ensure that the VXLAN packet is encrypted when the VXLAN security policy is complete.

Optionally, the VXLAN security policy includes a key, and the first network device applies the key, as a parameter, to an algorithm for generating a ciphertext.

Optionally, the VXLAN security policy includes a key generation algorithm identifier, and the first network device obtains, according to the key generation algorithm identifier, an algorithm for generating a key, generates the key according to the algorithm for generating the key, and applies the key, as a parameter, to an algorithm for generating a ciphertext.

Optionally, the VXLAN security policy further includes an encryption algorithm identifier, and the first network device obtains the algorithm for generating a ciphertext according to the encryption algorithm identifier, and encrypts, according to the algorithm for generating a ciphertext, the VXLAN packet carrying the VNI.

Optionally, the VXLAN security policy further includes an encryption range identifier, and the first network device obtains an encryption range according to the encryption range identifier, and determines to-be-encrypted content in the VXLAN packet according to the encryption range.

Optionally, the encryption flag bit (for example, an eighth flag bit in a header of the VXLAN packet may be used) is carried in a VXLAN header of the encrypted VXLAN packet.

Optionally, before the receiving, by a first network device, a VNI from a controller and a VXLAN security policy corresponding to the VNI, the method includes: sending, by the first network device, a request message for requesting allocation of the VNI to the controller, where the request message carries property information of the first network device.

Optionally, the request message further includes a VXLAN security policy identifier, and the VXLAN security policy identifier is used to indicate the VXLAN security policy (for example, the VXLAN security policy identifier includes a VXLAN security policy number, a security level identifier, or a policy type identifier).

According to a third aspect, a decryption method for processing a VXLAN packet is provided. The method includes: receiving, by a second network device, an encrypted VXLAN packet from a first network device, where the encrypted VXLAN packet carries a VNI, and the first network device and the second network device are located in a virtual network indicated by the VNI; obtaining a VXLAN security policy corresponding to the VNI according to the VNI in the encrypted VXLAN packet when the second network device determines that an encryption flag bit carried in the encrypted VXLAN packet is set, where the VXLAN security policy is from a controller; and then decrypting the encrypted VXLAN packet according to the VXLAN security policy.

Based on the solution provided in this embodiment, a network device decrypts the encrypted VXLAN packet based on the VXLAN security policy delivered by the controller, and negotiation of a key and an algorithm does not need to be performed between network devices that are used as a transmit end and a receive end, so that configuration flexibility is improved.

Optionally, before the receiving, by a second network device, an encrypted VXLAN packet from a first network device, the method further includes: receiving, by the second network device, the VNI from the controller and the VXLAN security policy corresponding to the VNI.

Optionally, the obtaining, by the second network device, a VXLAN security policy corresponding to the VNI according to the VNI in the encrypted VXLAN packet when the second network device determines that an encryption flag bit carried in the encrypted VXLAN packet is set specifically includes: when the second network device determines that the encryption flag bit carried in the encrypted VXLAN packet is set, sending, by the second network device, a request message to the controller, where the request message carries the VNI; and receiving, by the second network device, the VNI from the controller and the VXLAN security policy corresponding to the VNI. The implementation achieves the following beneficial effect: The second network device requests the VXLAN security policy from the controller only when the second network device needs to decrypt the encrypted VXLAN packet, so that network bandwidth can be saved.

Optionally, before the decrypting, by the second network device, the encrypted VXLAN packet according to the VXLAN security policy, the method further includes: determining, by the second network device, that policy authentication data carried in the encrypted VXLAN packet is the same as policy authentication data carried in the VXLAN security policy, where the policy authentication data is used to verify consistency of the VXLAN security policies.

Optionally, before the decrypting, by the second network device, the encrypted VXLAN packet according to the VXLAN security policy, the method further includes: generating, by the second network device, policy authentication data according to a policy authentication algorithm identifier carried in the VXLAN security policy, and determining that the generated policy authentication data is the same as policy authentication data carried in the encrypted VXLAN packet, where the policy authentication data is used to verify consistency of the VXLAN security policies.

An implementation of determining, by the second network device, whether the policy authentication data is the same achieves the following beneficial effect: The second network device may determine, according to the policy authentication data, consistency of the VXLAN security policies used by the first network device and the second network device, so as to ensure that the encrypted VXLAN packet is decrypted when the VXLAN security policies are consistent.

Optionally, after the decrypting, by the second network device, the encrypted VXLAN packet according to the VXLAN security policy, the method further includes: receiving, by the second network device, the VNI from the controller and VXLAN security policy update information corresponding to the VNI; updating a corresponding part of the VXLAN security policy according to the VXLAN security policy update information, to obtain an updated VXLAN security policy; and deleting, by the second network device, the VXLAN security policy after a predetermined time. This helps resolve a problem of a packet loss of the VXLAN packet caused when the controller updates the VXLAN security policy.

Optionally, the VXLAN security policy includes a key, and the second network device applies the key, as a parameter, to a decryption algorithm.

Optionally, the VXLAN security policy includes a key generation algorithm identifier, and the second network device obtains, according to the key generation algorithm identifier, an algorithm for generating a key, generates the key according to the algorithm for generating the key, and applies the key, as a parameter, to a decryption algorithm.

Optionally, the VXLAN security policy further includes an encryption algorithm identifier, and the second network device obtains the decryption algorithm according to the encryption algorithm identifier, and encrypts the carried encrypted VXLAN packet according to the decryption algorithm.

Optionally, the VXLAN security policy further includes an encryption range identifier, and the second network device obtains an encryption range according to the encryption range identifier, and determines to-be-decrypted content in the encrypted VXLAN packet according to the encryption range.

According to a fourth aspect, a controller is provided. The controller has a function of implementing behavior of the controller in the foregoing methods. The function may be implemented based on hardware, or may be implemented based on hardware executing corresponding software. The hardware or software includes one or more modules corresponding to the foregoing functions.

In a possible design, a structure of the controller includes a processor and an interface. The processor is configured to support execution of corresponding functions in the foregoing methods by the controller. The interface is configured to support communication between the controller and a network device, and send information or instructions used in the foregoing methods to the network device. The controller may further include a memory. The memory is configured to be coupled to the processor, and save program instructions and data that are required for the controller.

According to a fifth aspect, a first network device is provided. The first network device has a function of implementing behavior of the first network device in the foregoing methods. The function may be implemented based on hardware, or may be implemented based on hardware executing corresponding software. The hardware or software includes one or more modules corresponding to the foregoing functions.

In a possible design, a structure of the first network device includes a processor and an interface. The processor is configured to support execution of corresponding functions in the foregoing methods by the first network device. The interface is configured to support communication between the first network device and a second network device and/or a controller, and send information or instructions used in the foregoing methods to the second network device and/or the controller. The first network device may further include a memory. The memory is configured to be coupled to the processor, and save program instructions and data that are required for the first network device.

According to a sixth aspect, a second network device is provided. The second network device has a function of implementing behavior of the second network device in the foregoing methods. The function may be implemented based on hardware, or may be implemented based on hardware executing corresponding software. The hardware or software includes one or more modules corresponding to the foregoing functions.

In a possible design, a structure of the second network device includes a processor and an interface. The processor is configured to support execution of corresponding functions in the foregoing methods by the second network device. The interface is configured to support communication between the second network device and a first network device and/or a controller, and send information or instructions used in the foregoing methods to the first network device and/or the controller. The second network device may further include a memory. The memory is configured to be coupled to the processor, and save program instructions and data that are required for the second network device.

According to a seventh aspect, a system for processing a VXLAN packet is provided. The system includes a controller, a first network device, and a second network device. The controller is the controller in the fourth aspect, the first network device is the first network device in the fifth aspect, and the second network device is the second network device in the sixth aspect.

According to an eighth aspect, a computer storage medium is provided. The computer storage medium is configured to store programs, code, or instructions used by the foregoing controller. When executing these programs, code, or instructions, a processor or a hardware device may complete the functions of the controller or the steps in the foregoing aspects.

According to a ninth aspect, a computer storage medium is provided. The computer storage medium is configured to store programs, code, or instructions used by the foregoing first network device. When executing these programs, code, or instructions, a processor or a hardware device may complete the functions of the first network device or the steps in the foregoing aspects.

According to a tenth aspect, a computer storage medium is provided. The computer storage medium is configured to store programs, code, or instructions used by the foregoing second network device. When executing these programs, code, or instructions, a computer or a hardware device may complete the functions of the second network device or the steps in the foregoing aspects.

By means of the foregoing solutions, for the method, device, and system for processing a VXLAN packet provided in the embodiments of the present invention, the controller obtains a request message for requesting allocation of a VXLAN network identifier (VXLAN Network Identifier, VNI), obtains the VNI according to the request message, and obtains a VXLAN security policy corresponding to the VNI. When delivering the VNI to the network device, the controller adds the VXLAN security policy corresponding to the VNI. In this way, when encapsulating a VXLAN packet, a network device used as a transmit end applies the corresponding VXLAN security policy according to the VNI to encrypt the VXLAN packet. Correspondingly, when decapsulating an encrypted VXLAN packet, a network device used as a receive end applies the corresponding VXLAN security policy according to the VNI to decrypt the encrypted VXLAN packet. During application of the method, device, and system in the embodiments of the present invention, encrypted data does not need to be configured at the transmit end and the receive end, and negotiation of a key and an algorithm does not need to be performed, so that configuration flexibility is improved, overheads of a packet header length and configuration complexity are reduced at the same time, and a broadcast function for the VXLAN packet is not affected.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and a person of ordinary skill in the art can derive other implementations from these accompanying drawings without creative efforts. All these embodiments or implementations fall within the protection scope of the present invention.
FIG. 1 is a schematic diagram of a possible application scenario according to the present invention;
FIG. 2 is a schematic diagram of another possible application scenario according to the present invention;
FIG. 3 is a flowchart of an encryption method for a VXLAN packet according to an embodiment of the present invention;
FIG. 4 is a flowchart of another encryption method for a VXLAN packet according to an embodiment of the present invention;
FIG. 5 is a flowchart of a decryption method for an encrypted VXLAN packet according to an embodiment of the present invention;
FIG. 6a is a schematic diagram of an encapsulated packet according to an embodiment of the present invention;
FIG. 6b is a schematic diagram of another encapsulated packet according to an embodiment of the present invention;
FIG. 6c is a schematic diagram of still another encapsulated packet according to an embodiment of the present invention;
FIG. 7 is a schematic diagram of a format of a VXLAN header according to an embodiment of the present invention;
FIG. 8 is a schematic structural diagram of a controller according to an embodiment of the present invention;
FIG. 9 is a schematic structural diagram of hardware of a controller according to an embodiment of the present invention;
FIG. 10 is a schematic structural diagram of a first network device according to an embodiment of the present invention;
FIG. 11 is a schematic structural diagram of hardware of a first network device according to an embodiment of the present invention;
FIG. 12 is a schematic structural diagram of a second network device according to an embodiment of the present invention; and
FIG. 13 is a schematic structural diagram of hardware of a second network device according to an embodiment of the present invention.

### DESCRIPTION OF EMBODIMENTS

The technical solutions according to embodiments of the present invention are clearly and completely described in the following with reference to the accompanying drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

A network architecture and a service scenario described in the embodiments of the present invention are intended to describe the technical solutions in the embodiments of the present invention more clearly, and do not constitute any limitation to the technical solutions provided in the embodiments of the present invention. A person of ordinary skill in the art may know that with evolution of network architectures and appearance of new service scenarios, the technical solutions provided in the embodiments of the present invention are also applicable to similar technical problems.

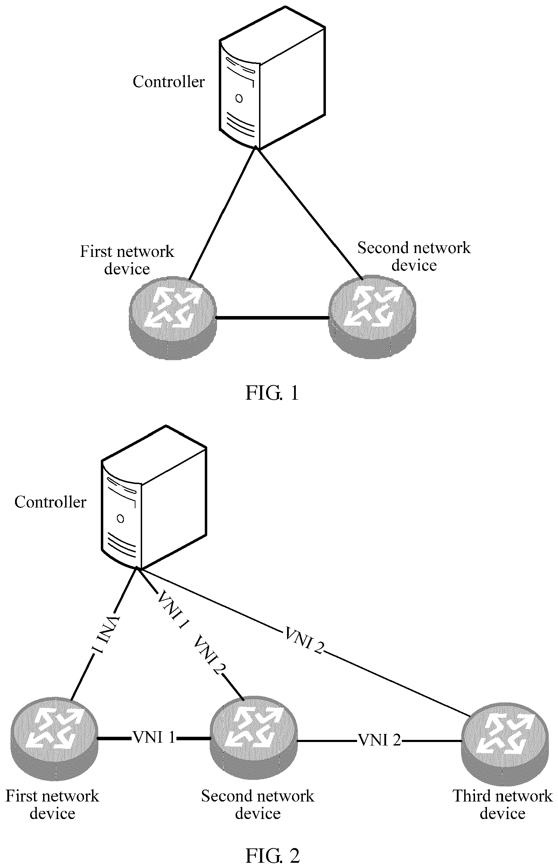

For ease of understanding and description of an encryption method, device, and system for a VXLAN packet provided in the embodiments of the present invention, first, a possible application scenario of an embodiment of the present invention is described with with reference to FIG. 1.

As shown in FIG. 1, an application scenario for encrypting a VXLAN packet includes a controller, a first network device, and a second network device. For example, the first network device is used as a transmit end of a VXLAN packet, and the second network device as a receive end of the VXLAN packet. The first network device communicates with the second network device, so that the first network device can send the VXLAN packet to the second network device. The controller separately communicates with the first network device and the second network device, so that the controller can send a VXLAN security policy to the first network device and the second network device. The VXLAN security policy is used to implement an encryption and decryption process for the VXLAN packet. That is, the first network device may perform encryption processing on a VXLAN packet according to the VXLAN security policy, and the second network device may perform decryption processing on an encrypted VXLAN packet according to the VXLAN security policy.

The first network device and the second network device may be routers or switches. The switch may be a physical switch or a virtual switch (virtual switch, vSwitch). In the scenario shown in FIG. 1, optionally, the first network device and the second network device may be used as a network virtualization edge (Network Virtualization Edge, NVE) device. In a specific implementation, the first network device and the second network device are located in one data center (data center, DC). Optionally, other network devices may be further included on a communications link between the first network device and the second network device. In another specific implementation, the first network device and the second network device are located in different DCs. For example, the first network device is located in DC1, and the second network device is located in DC2. DC1 communicates with DC2 by using a public network. Optionally, the public network may be based on an IP network, a multiprotocol label switching (Multiprotocol Label Switching, MPLS) network, or an Ethernet virtual private network (Ethernet VPN, EVPN) EVPN network (where VPN means a virtual private network, virtual private network). Optionally, the public network may include a provider edge (provider edge, PE) device and a provider (provider, P) device. In the foregoing two specific implementations, the first network device sends a VXLAN packet to the second network device. The VXLAN packet includes a VNI. The VNI is used to indicate that the first network device and the second network device belong to one virtual network. Specifically, the VNI is used to indicate a virtual network. The controller uses a VNI to allocate a virtual network to a network device. For example, the controller delivers a VNI 1 to the first network device and the second network device. The VNI 1 is used to identify a virtual network. The virtual network includes the first network device and the second network device.

FIG. 2 is a schematic diagram of another possible application scenario according to the present invention. A difference between the application scenario shown in FIG. 2 and the application scenario shown in FIG. 1 lies in that a third network device is added. The third network device communicates with the controller, and the third network device communicates with the second network device. The third network device may be a router or a switch. The switch may be a physical switch or a virtual switch (virtual switch, vSwitch). Optionally, the third network device may be used as an NVE device. The controller delivers a VNI 1 to the first network device and the second network device. The VNI 1 is used to indicate a first virtual network. The first virtual network includes the first network device and the second network device. The controller delivers a VNI 2 to the second network device and the third network device. The VNI 2 is used to indicate a second virtual network. The second virtual network includes the second network device and the third network device. As can be seen from the scenario shown in FIG. 2, one network device may be located in different virtual networks. When one network device is located in different virtual networks, the controller may allocate more than one VNI. Each VNI identifies one virtual network. For example, the second network device is located in the first virtual network, and is at the same time located in the second virtual network. In this way, the controller delivers the VNI 1 and the VNI 2 to the second network device. One network device may be allocated to more than two virtual networks. This is not limited herein.

For example, the controller obtains a request message for requesting allocation of the VNI, and an obtaining manner is not limited. In a specific implementation, the request message for requesting allocation of the VNI may be from an APP (Application) device. In a specific implementation, the APP device may be a server. Software is installed in the server to provide functions needed by a service. The controller communicates with the APP device (the APP device is not shown in FIG. 1 and FIG. 2). The APP device includes property information of a network device connected to the controller. The property information is used to identify the network device. For example, the property information may include an IP address or a MAC address of the network device. The APP device sends the request message for requesting allocation of the VNI to the controller. The request message carries the property information of the network device. Further optionally, the property information may further include interface information of the network device and/or capability information of the network device. The capability information of the network device is used to identify performance of the network device. For example, the network device has a layer-3 routing function. In a specific implementation, the APP device and the controller are physically independent. In another scenario, the App device and the controller may be disposed together on one physical device. That is, a function performed by the APP device is used as a part of the controller and is integrated in the controller. In this way, the controller may obtain, from a corresponding module of the controller, the request message for requesting allocation of the VNI, or another manner may be used to trigger the controller to obtain the VNI and the VXLAN security policy corresponding to the VNI and allocate the VNI and the VXLAN security policy to the corresponding network device. In another specific implementation, the request message for requesting allocation of the VNI may be from the network device connected to the controller. That is, the network device sends the request message for requesting allocation of the VNI to the controller. The request message carries the property information of the network device. In addition, in a relatively simple application scenario, a network administrator may directly input the request message for requesting allocation of the VNI to the controller.

The VNI is a 24-bit value, and is used to distinguish between different virtual networks. For example, in the scenario shown in FIG. 1, the first network device and the second network device are allocated to one virtual network. The controller may obtain the request message for requesting allocation of the VNI according to the foregoing implementation. The request message includes the property information of the corresponding network device in the virtual network. For example, the request message includes IP addresses of the first network device and the second network device. The controller allocates one VNI to the virtual network, and sends the VNI to the first network device and the second network device according to the IP addresses of the first network device and the second network device. In this way, the first network device may use the VNI to encapsulate the VXLAN packet. Correspondingly, the second network device may decapsulate the VXLAN packet according to the VNI. Moreover, the controller records a correspondence between the VNI and the virtual network. A specific value of the VNI allocated by the controller is not limited. For example, according to network planning, in the 24-bit value of the VNI, values 1 to 500 are allowed to be allocated to a virtual network. The controller may randomly generate one value, for example, 105, in a value range of 1 to 500, use the value as the value of the VNI, and allocate the value to a corresponding virtual network.

The controller obtains the VNI according to the request message and obtains the VXLAN security policy corresponding to the VNI. The controller obtains the VXLAN security policy, and an obtaining manner is not limited. For example, the VXLAN security policy may be directly configured on the controller. Alternatively, a policy rule may be set on the controller in advance, and the controller automatically generates the VXLAN security policy according to the policy rule. Alternatively, a combination of the two manners is used. The controller uses different manners to obtain the VXLAN security policy in different cases. In an implementation in which the VXLAN security policy is directly configured on the controller, specifically, the VXLAN security policy may be configured on the controller by using a static configuration manner. For example, the network administrator directly configures the VXLAN security policy on the controller by using an interaction interface, and then allocates the VXLAN security policy to the VNI. In an implementation in which the controller automatically generates the VXLAN security policy according to the policy rule, specifically, the policy rule may be set on the controller in advance. For example, the policy rule is a security level, and the security level is a high level. In this way, the controller selects a key generation algorithm, an encryption algorithm, and an encryption range that satisfy that the security level is a high level to generate the VXLAN security policy, and then allocates the VXLAN security policy to the VNI. There may be one VXLAN security policy, and the controller configures the VXLAN security policy for the VNI. There may be multiple VXLAN security policies, and the controller randomly selects one VXLAN security policy and configures the VXLAN security policy for the VNI. Alternatively, the request message carries a VXLAN security policy identifier. The controller configures, for the VNI, the VXLAN security policy indicated by the VXLAN security policy identifier. A specific implementation of the VXLAN security policy identifier is described in detail in the following embodiments. After obtaining the VXLAN security policy, the controller records the VNI and the VXLAN security policy corresponding to the VNI in a correspondence table of a VNI and a VXLAN security policy of the controller.

A specific order of a process in which the controller obtains the request message for requesting allocation of the VNI and a process in which the controller obtains the VXLAN security policy is not limited. On one hand, the controller may obtain the VXLAN security policy before obtaining the request message for requesting allocation of the VNI. For example, at least one VXLAN security policy is configured in advance on the controller, and after obtaining the request message for requesting allocation of the VNI, the controller selects the VXLAN security policy and allocates the VXLAN security policy to the VNI. One the other hand, the controller may obtain the VXLAN security policy after obtaining the request message for requesting allocation of the VNI. For example, after obtaining the request message for requesting allocation of the VNI, the controller configures at least one VXLAN security policy in advance, and allocates the at least one VXLAN security policy to the VNI.

The controller allocates the VNI to the first network device and the second network device, and sends the VXLAN security policy corresponding to the VNI to the first network device and the second network device. After receiving the VNI allocated by the controller and the VXLAN security policy corresponding to the VNI, the first network device encapsulates the VXLAN packet according to the VNI. A VXLAN packet header of the VXLAN packet carries the VNI. Moreover, the first network device encrypts the VXLAN packet according to the VXLAN security policy, to obtain an encrypted VXLAN packet. The first network device sends the encrypted VXLAN packet to the second network device. After receiving the encrypted VXLAN packet, the second network device decapsulates the encrypted VXLAN packet according to the VNI, and decrypts the encrypted VXLAN packet according to the VXLAN security policy, to obtain the VXLAN packet. In this way, secure transmission of the VXLAN packet is implemented.

By using the foregoing solution, the controller implements centralized configuration and deployment of a VXLAN security policy, encrypted data does not need to be configured at the transmit end and the receive end, and negotiation of a key and an algorithm does not need to be performed, so that configuration flexibility is improved. Moreover, the VXLAN packet is encrypted based on the VXLAN security policy, and an IPSec encryption manner does not need to be used, so that overheads of a packet header length and configuration complexity are reduced, and a broadcast function for the VXLAN packet is not affected.

In this application, the function of the controller may be implemented by using hardware, or may be implemented by using hardware executing corresponding software. For example, a blade server is used as the controller. For example, the controller may be an SDN controller. The SDN controller has a software-defined networking (Software Defined Networking, SDN) architecture based on a concept of separating control from forwarding. The SDN controller and the network device complete message exchange and information transfer by using a control channel specified in an OpenFlow protocol. Moreover, the controller in this application may be a standalone device, or may be multiple devices, for example, a controller cluster or a controller group. The first network device and the second network device used in this application are often referred to as "forwarders" in an application scenario of a VXLAN. A person skilled in the art may understand the meaning of the "forwarders". In this application, the first network device is used as a transmit end of a VXLAN packet, and the second network device is used as the receive end of a VXLAN packet. In an actual application scenario, the first network device and the second network device may transmit a VXLAN packet to each other. That is, the first network device is used as the transmit end of a VXLAN packet, and may also be used as the receive end of a VXLAN packet. Correspondingly, the second network device is used as the receive end of a VXLAN packet, and may also be used as the transmit end of a VXLAN packet. In this application, the controller and the first network device may be directly connected and the controller and the second network device may be directly connected by using a communications link, or may communicate by using another network device. Similarly, the first network device and the second network device may be directly connected by using a communications link, or may communicate by using another network device. In this application, one first network device and one second network device are used as an example for description. It should be understood that a VXLAN network may include multiple first network devices and/or multiple second network devices.

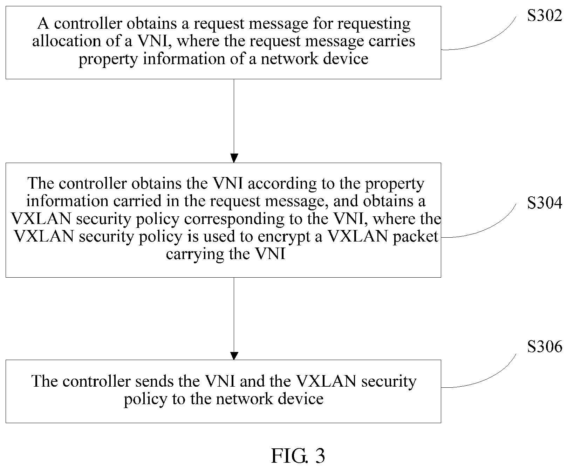

FIG. 3 is a flowchart of an encryption method for a VXLAN packet according to an embodiment of the present invention. A controller and a network device are mainly used in the method. The controller is used as a device on a service control plane, and may be the controller in the foregoing embodiment. The network device is used as a device on a service forwarding plane, and may be specifically at least one of the first network device or the second network device in the foregoing embodiment. The method includes the following steps.

S302: The controller obtains a request message for requesting allocation of a VNI, where the request message carries property information of the network device.

A specific obtaining manner may be the same as the manner in which the controller obtains the request message for the VNI in the foregoing embodiment. Details are not described here again.

S304: The controller obtains the VNI according to the property information carried in the request message, and obtains a VXLAN security policy corresponding to the VNI, where the VXLAN security policy is used to encrypt a VXLAN packet carrying the VNI.

S306: The controller sends the VNI and the VXLAN security policy to the network device.

In this embodiment of this application, the controller is used as a device on the service control plane, and may be responsible for generating a VNI and allocating the VNI to a network device on the service forwarding plane. The network device on the service forwarding plane uses the VNI to generate the VXLAN packet. The controller obtains the request message for requesting allocation of the VNI. The controller obtains the VNI according to the request message. The controller is further configured to obtain the VXLAN security policy, and an obtaining manner is not limited. The VXLAN security policy may be directly configured on the controller. Alternatively, a policy rule may be set on the controller in advance, and the controller automatically generates the VXLAN security policy according to the policy rule. There may be one or more VXLAN security policies. For a specific implementation, refer to corresponding description in the foregoing embodiments. Details are not described here again. After obtaining the VXLAN security policy, the controller records the VNI and the VXLAN security policy corresponding to the VNI in a correspondence table of a VNI and a VXLAN security policy of the controller. One VXLAN security policy corresponds to one VNI, or one VXLAN security policy corresponds to multiple VNIs. For example, a correspondence between a VNI and a VXLAN security policy may be shown in Table 1.

**Table 1 Correspondence table of a VNI and a VXLAN security policy**

| VNI | VXLAN security policy |
|---|---|
| VNI 1 | VXLAN security policy 1 |
| VNI 2 | VXLAN security policy 2 |
| VNI 3 | VXLAN security policy 2 |
| VNI 4 | VXLAN security policy 3 |
| ... | ... |

The following describes how the controller sends a VNI and a VXLAN security policy to the network device. The controller obtains the request message for requesting allocation of the VNI. According to the foregoing embodiment, the request message may be from an APP device, the controller or the network device. When the request message is from the APP device or the controller, the APP device or the controller includes the property information of the network device connected to the controller. The request message carries the property information. When the request message is from the network device, the network device may request for allocation of the VNI on a basis of a service. For example, when the network device needs to send the VXLAN packet, the network device sends the request message to the controller. The request message carries the property information of the network device. For example, in the scenario shown in FIG. 1, the first network device and the second network device are allocated to one virtual network. The request message includes the property information of the corresponding network device in the virtual network. For example, the request message includes IP addresses of the first network device and the second network device. After obtaining the request message, the controller generates one VNI. The VNI is used to identify the virtual network, that is, the VNI corresponds to the IP addresses of the first network device and the second network device in the request message. The controller uses the IP addresses of the first network device and the second network device as a destination address, and delivers the VNI to the first network device and the second network device.

The controller obtains the VNI according to the request message, and obtains the VXLAN security policy corresponding to the VNI. The controller may obtain the VXLAN security policy by using direct configuration, and/or automatically generate the VXLAN security policy according to the policy rule that is set in advance. In an actual application scenario, there may be one VXLAN security policy. The controller uses the one VXLAN security policy as the VXLAN security policy and configures the VXLAN security policy for the VNI. In this way, when the controller needs to allocate different VNIs to multiple network devices, the controller configures a same VXLAN security policy for all the VNIs. There may be multiple VXLAN security policies. The controller randomly selects one VXLAN security policy as the VXLAN security policy and configures the VXLAN security policy for the VNI. Alternatively, the request message carries a VXLAN security policy identifier. The controller uses a VXLAN security policy indicated by the VXLAN security policy identifier as the VXLAN security policy and configures the VXLAN security policy for the VNI. The VXLAN security policy identifier may include a VXLAN security policy number, a security level identifier, a policy type identifier, or the like. This is not limited herein. A specific implementation of obtaining the VXLAN security policy according to the VXLAN security policy identifier and combining the VXLAN security policy and the policy rule to automatically generate the VXLAN security policy is described in detail in the following embodiments.

In this application, the controller sends the VNI and the VXLAN security policy to the network device. Specifically, the controller sends the VNI and the VXLAN security policy to the corresponding network device according to the network device indicated by the property information in the request message. For example, in the scenario shown in FIG. 1, the first network device and the second network device are allocated to one virtual network. The controller delivers the VNI to the first network device and the second network device, and sends the corresponding VXLAN security policy to the corresponding first network device and second network device. Optionally, the controller may put the VNI and the VXLAN security policy in one packet and send the packet to the network device. The controller may alternatively put the VNI and the VXLAN security policy in multiple packets and separately send the packets to the network device. For example, the controller first sends the VNI to the network device and then sends the VXLAN security policy to the network device. Further, the controller may further divide the VXLAN security policy into multiple packets, and separately send the multiple packets to the network device. When the controller sends the VNI and the VXLAN security policy by using multiple packets, each of the multiple packets carries an identifier. The identifier is used to indicate that the multiple packets belong to one original packet.

The controller may send the VXLAN security policy corresponding to the VNI to the network device used as a transmit end and the network device used as a receive end. The network device used as the transmit end and the network device used as the receive end are located in one virtual network. In another optional implementation, the controller may selectively send the VXLAN security policy corresponding to the VNI to one or more network devices. For example, the controller first sends the VNI to the network device used as the transmit end and the network device used as the receive end, and then sends the VXLAN security policy corresponding to the VNI to the network device used as the transmit end, without actively sending the VXLAN security policy to the network device used as the receive end. When receiving the VXLAN packet from the network device used as the transmit end, the network device used as the receive end determines whether the VXLAN packet is an encrypted packet. When the VXLAN packet is an encrypted packet, the network device used as the receive end requests a corresponding VXLAN security policy from the controller according to a VNI carried in the encrypted VXLAN packet. After receiving the request message, the controller sends the VXLAN security policy corresponding to the VNI to the network device used as the receive end. An implementation in which the network device used as the receive end determines whether the VXLAN packet is an encrypted packet is described in the following embodiments, and details are not described here. The implementation achieves the following beneficial effect: In some application scenarios, not all VXLAN packets may need to be encrypted, but instead, some of the VXLAN packets need to be encrypted. That is, a VXALN security policy is implemented for some of the VXLAN packets. Therefore, when determining that an encrypted VXLAN packet needs to be decrypted, the receive end requests the VXLAN security policy from the controller, so that traffic overheads of a network system can be saved.

In the prior art, an IPSec technology is used, and a key and an algorithm are negotiated between the transmit end and the receive end to encrypt a VXLAN packet. As a result, centralized configuration and deployment of encrypted data cannot be implemented, and configuration flexibility is reduced.

In the encryption method for a VXLAN packet provided in this embodiment of this application, encrypted data does not need to be configured at the transmit end and the receive end, and negotiation of a key and an algorithm does not need to be performed, so that configuration flexibility is improved.

Optionally, the request message further includes a VXLAN security policy identifier, the VXLAN security policy identifier is used to indicate the VXLAN security policy, and the controller obtains the VXLAN security policy corresponding to the VNI according to the VXLAN security policy identifier.

When the controller includes multiple VXLAN security policies, the controller may select a VXLAN security policy corresponding to the VXLAN security policy identifier according to the VXLAN security policy identifier included in the request message.

Optionally, the VXLAN security policy identifier includes a VXLAN security policy number, a security level identifier, or a policy type identifier.

For example, the VXLAN security policy number may use a sequence number to identify each VXLAN security policy. The security level identifier is used to indicate a security level of the VXLAN security policy. Specifically, each VXLAN security policy may be identified with a "high level", a "middle level", or a "low level". The policy type identifier is used to indicate a policy type of the VXLAN security policy. Specifically, each VXLAN security policy may be identified with "applicable to a bank user", "applicable to a home user", "applicable to an enterprise user", or the like. After obtaining the VXLAN security policy, the controller records the VNI and the VXLAN security policy corresponding to the VNI in the correspondence table of a VNI and a VXLAN security policy of the controller. The VXLAN security policy is used to encrypt the VXLAN packet.

For example, the request message carries a security level identifier and the security level identifier is used as a VXLAN security policy identifier. The request message carries a security level identifier. When obtaining a VXLAN security policy, the controller may configure one security level identifier for each VXLAN security policy. A rule of the security level identifier in the request message is the same as a rule of a security level identifier configured in the controller. After obtaining the security level identifier in the request message, the controller matches the security level identifier against the security level identifier configured in the controller. When the two security level identifiers are the same, the controller selects the corresponding VXLAN security policy. Optionally, a security level of the VXLAN security policy may be described according to at least one of complexity of a key, complexity of an encryption algorithm, or an encryption range. For example, when the complexity of a key is higher, it indicates that the security level of the VXLAN security policy is higher. In another example, when the encryption range is higher, it indicates that the security level of the VXLAN security policy is higher. Specifically, the controller may grade complexity of a key, complexity of an encryption algorithm, or a size of an encryption range, and associate grades of the complexity of a key, the complexity of an encryption algorithm, and an encryption range with security levels of a VXLAN security policy. For example, the correspondence between a VNI and a VXLAN security policy with a security level may be shown in Table 2. The implementation achieves the following beneficial effect: Based on centralized configuration and deployment of a VXLAN security policy, VXLAN security policies of different security levels are allocated to users having different security level requirements, so as to meet security requirements of different users. Optionally, the controller may actively deploy VXLAN security policies with different security levels. For example, the controller considers that one or more network devices need to use a strict encryption service, and allocates a VXLAN security policy with a high security level. Alternatively, the network device may initiate deployment of VXLAN security policies with different security levels. For example, when sending a request, the network device adds a security level identifier to the request. The controller matches the received security level identifier against a security level identifier in the controller, to determine a VXLAN security policy of a corresponding security level.

**Table 2 Correspondence table of a VNI and a VXLAN security policy that carries a security level**

| VNI | VXLAN security policy | Security level identifier |
|---|---|---|
| VNI 1 | VXLAN security policy 1 | High level |
| VNI 2 | VXLAN security policy 2 | Middle level |
| VNI 3 | VXLAN security policy 2 | Middle level |
| VNI 4 | VXLAN security policy 3 | Low level |
| ... | ... | ... |

In an optional implementation, generally, the controller knows, in advance, which VNIs may be allocated to the network device. For example, a VNI 1 to a VNI 500 may be allocated to the network device. After obtaining a VXLAN security policy, the controller first establishes a correspondence table of a VNI and a VXLAN security policy. The correspondence table records a VXLAN security policy identifier of each VXLAN security policy. Table 2 is used as an example. The controller first establishes the correspondence table shown in Table 2. When obtaining the request message for requesting allocation of the VNI, the controller determines the corresponding VXLAN security policy according to the security level identifier in the request message, then finds the corresponding usable VNI according to the VXLAN security policy, and allocates the VNI and the VXLAN security policy corresponding to the VNI to the network device. For example, the security level identifier carried in the request message is "high level", the controller finds "VXLAN security policy 1" in the correspondence table shown in Table 2 by using "high level", and then determines "VNI 1" according to "VXLAN security policy 1". In this way, the VNI 1 and the VXLAN security policy 1 may be allocated to the network device.

Optionally, the controller automatically generates the VXLAN security policy according to a preset policy rule.

The preset policy rule may include a security level or a policy type. The security level may be the security level discussed in the foregoing embodiment, and the policy type may be the policy type discussed in the foregoing embodiment. An example in which a security level is used as the policy rule is described. A security level may be described according to at least one of complexity of a key, complexity of an encryption algorithm, and an encryption range. A key generation algorithm set, an encryption algorithm set, and an encryption range set are configured on the controller. Moreover, the controller may grade complexity of a key, complexity of an encryption algorithm, or a size of an encryption range. For example, complexity of a key generation algorithm is graded from "high complexity", "middle complexity", to "low complexity". Complexity of an encryption algorithm is graded from "high complexity", "middle complexity", to "low complexity". An encryption range is graded from "large range", "middle range", to "small range". When the controller needs to generate a VXLAN security policy whose security level is "high level", the controller automatically selects a key generation algorithm with "high complexity", an encryption algorithm with "high complexity", and an encryption range with "large range", so as to automatically generate a VXLAN security policy with "high level". One or a combination of a key generation algorithm, an encryption algorithm, or an encryption range may be used as a measure of a security level. This is not limited herein. In an optional implementation, before obtaining the VNI according to the property information carried in the request message and obtaining the VXLAN security policy corresponding to the VNI, the controller automatically generates the VXLAN security policy according to the preset policy rule. For example, the controller automatically generates at least one VXLAN security policy in advance according to the preset policy rule. After obtaining the VNI according to the property information carried in the request message, the controller selects one of the at least one VXLAN security policy and allocates the VXLAN security policy to the VNI. In another optional implementation, the controller obtains the VNI according to the property information carried in the request message, and automatically generates the VXLAN security policy according to a requirement of generating the VXLAN security policy in the request message and based on the preset policy rule, so as to obtain the VXLAN security policy corresponding to the VNI. For example, the request message carries a security level identifier, and the security level identifier is "high level". The controller may automatically generate the VXLAN security policy according to a requirement of the security level identifier in the request message. Specifically, the controller configures a VXLAN security policy with a high level, and then allocates the VXLAN security policy to the VNI.

Optionally, the VXLAN security policy includes policy authentication data or a policy authentication algorithm identifier, and the policy authentication algorithm identifier is used to indicate an algorithm for generating the policy authentication data. The policy authentication data is used to verify integrity and consistency of the VXLAN security policy.

In this embodiment of in this application, the controller may add policy authentication (Policy authentication) data or a policy authentication algorithm identifier to the VXLAN security policy sent to the network device. The two forms, namely, the policy authentication data and the policy authentication algorithm identifier, are separately described below.

In an optional implementation, the VXLAN security policy carries policy authentication data. When generating a VXLAN security policy, the controller configures policy authentication data, and then sends the VXLAN security policy carrying the policy authentication data to a control device. As described above, the VXLAN security policy may be put in one packet that is sent to the control device, or may be put in multiple packets that are separately sent to the control device. When multiple packets are used to send the VXLAN security policy, the policy authentication data is put in the last packet. One objective is to make it easy for the network device to verify the integrity of the VXLAN security policy according to the policy authentication data. Another objective of the use of the policy authentication data is that the network device at the transmit end and the network device at the receive end may verify, according to the policy authentication data, that VXLAN security policies used for encryption and decryption are consistent. A specific verification manner is described in the following embodiments. The controller may generate the policy authentication data by using multiple methods. For example, an initial value M and a step length N are used to generate different policy authentication data. In another example, a random number is used to generate different policy authentication data. In still another example, a predetermined algorithm is used to generate different policy authentication data. In addition, as described above, the controller may update the VXLAN security policy of the controller. Whether the entire VXLAN security policy or partial content of the VXLAN security policy is updated, both a new VXLAN security policy and new partial content of the VXLAN security policy need to carry newly generated policy authentication data. When receiving update information and updating an original VXLAN security policy, the network device also updates policy authentication data. In this way, correct execution of content update is easily ensured.

In another optional implementation, the VXLAN security policy carries a policy authentication algorithm identifier. An implementation of carrying a policy authentication algorithm identifier is similar to the foregoing implementation of carrying policy authentication data. A difference lies in that the controller sends, instead of policy authentication data, a policy authentication algorithm identifier to the network device. After receiving the policy authentication algorithm identifier, the network device calculates policy authentication data according to an algorithm that is for generating the policy authentication data and that is indicated by the policy authentication algorithm identifier. The algorithm for generating the policy authentication data may be stored in the network device. One or more algorithms for generating the policy authentication data may be included. For example, a policy authentication algorithm identifier 01 indicates that a Hash (Hash) algorithm is specified to generate the policy authentication data. The network device uses the Hash algorithm to perform operation on the VXLAN security policy, to obtain the policy authentication data. When the Hash algorithm is used to perform operation on the VXLAN security policy, Hash calculation may be performed on all content of the VXLAN security policy, or Hash calculation may be performed on partial content of the VXLAN security policy. In addition to the beneficial effect of the transfer of policy authentication data described above, an implementation of transferring the policy authentication algorithm identifier further facilitates reduction of processing overheads of the controller.

Optionally, the VXLAN security policy includes a key or a key generation algorithm identifier, and the key generation algorithm identifier is used to indicate an algorithm for generating the key.

In this application, the VXLAN security policy generated by the controller includes a key (secret key). The key is a parameter, or a parameter entered in an algorithm for converting plaintext into ciphertext or for converting ciphertext into plaintext. The network device at the transmit end and the network device at the receive end may apply a key to an encryption algorithm. The key is used for encrypting a VXLAN packet and for decrypting an encrypted VXLAN packet. A key exchange algorithm (Diffie-Hellman, DH) technology may be used in the algorithm for generating the key. The controller simulates the DH technology to generate a key. For the algorithm for generating the key, a knapsack algorithm, an RSA (Rivest Shamir Adleman) algorithm, or the like may be used. This is not limited herein.

In another optional implementation, the VXLAN security policy generated by the controller includes a key generation algorithm identifier. The controller does not directly generate a key, but instead, transfers the key generation algorithm identifier to the network device. After receiving the key generation algorithm identifier, the network device calculates a key according to an algorithm that is for generating the key and that is indicated by the key generation algorithm identifier. The algorithm for generating the key may be stored in the network device. One or more algorithms for generating the key may be included. For example, a key generation algorithm identifier 01 indicates that a DH technology is specified to generate a key. The network device uses the DH technology to calculate a key.

Optionally, the VXLAN security policy further includes an encryption algorithm identifier, and the encryption algorithm identifier is used to indicate an algorithm for generating a ciphertext.

In this embodiment of this application, the VXLAN security policy generated by the controller further includes an encryption algorithm identifier. Generally, an encryption algorithm is stored in the network device. One or more encryption algorithms may be included. The controller transfers the encryption algorithm identifier to the network device. After receiving the encryption algorithm identifier, the network device encrypts data or decrypts ciphertext according to an encryption algorithm indicated in the encryption algorithm identifier. For example, an encryption algorithm identifier 01 indicates that the Data Encryption Standard (Data Encryption Standard, DES) is specified to encrypt data or decrypt ciphertext. For the encryption algorithm, the Triple Data Encryption Standard (Triple Data Encryption Standard, 3DES), the Advanced Encryption Standard 128 (Advanced Encryption Standard 128, AES128), or the like may be used. This is not limited herein.

Generally, the encryption algorithm itself is not transmitted by using a communications link. That is, the controller and the network device transfer the encryption algorithm identifier instead of the encryption algorithm. This is to ensure security of information, and may occupy a relatively small bandwidth. However, this application does not exclude an implementation in which the controller and the network device transfer an encryption algorithm. That is, in some application scenarios, the controller may transfer an encryption algorithm to the network device.

Optionally, the VXLAN security policy further includes an encryption range identifier, and the encryption range identifier is used to indicate content for generating a ciphertext.

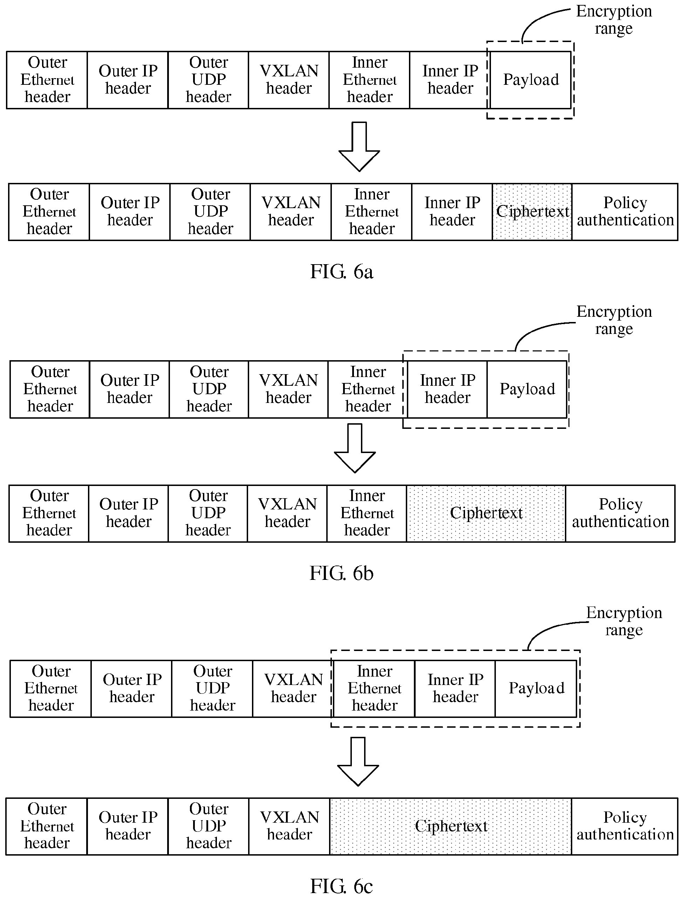

In this embodiment of this application, the VXLAN security policy generated by the controller further includes the encryption range identifier. The VXLAN security policy sent by the controller to the network device carries the encryption range identifier. After receiving the encryption range identifier, the network device generates content of ciphertext according to the indication of the encryption range identifier. As shown in FIG. 6a to FIG. 6c, FIG. 6a to FIG. 6c show a format of the VXLAN packet encapsulated by the network device. The VXLAN packet includes an outer Eth header (Outer Ethernet header), an outer IP header (Outer IP header), an outer UDP header (Outer UDP header), a VXLAN header (VXLAN header), an inner Eth header (Inner Ethernet header), an inner IP header (Inner IP header), and a payload (Payload). According to the foregoing implementations, policy authentication is added to the format of the VXLAN packet in this embodiment of in this application, as shown in FIG. 6a to FIG. 6c. The policy authentication is equivalent to the policy authentication data in the foregoing implementations. For a manner of generating the policy authentication data and an effect of the policy authentication data, refer to the foregoing implementation. Details are not described here again. Dotted-line parts in FIG. 6a to FIG. 6c are encryption ranges determined by the network device according to the encryption range identifier. The network device encrypts the corresponding part of the VXLAN packet according to the encryption range, to generate ciphertext. For example, if the encryption range identifier is 01, the network device determines to encrypt the payload in the VXLAN packet. If the encryption range identifier is 10, the network device determines to encrypt the inner IP header and the payload in the VXLAN packet. If the encryption range identifier is 11, and the network device determines to encrypt the inner Eth header, the inner IP header, and the payload in the VXLAN packet. Such a setting facilitates flexible setting of the VXLAN security policy, to provide encrypted ciphertext with different security levels.

In the prior art, an IPSec technology is used. As a result, overheads of a packet header length and configuration complexity are increased. In addition, after being encrypted by using IPSec, a VXLAN packet cannot be broadcast.

In the encryption method for a VXLAN packet provided in this embodiment of this application, no new packet header needs to be added, overheads of a packet header length and configuration complexity are reduced, and a broadcast function for the VXLAN packet is not affected.

Optionally, after the sending, by the controller, the VNI and the VXLAN security policy to the network device, the method further includes: updating, by the controller, the VXLAN security policy, where the updating the VXLAN security policy includes updating all content of the VXLAN security policy or updating partial content of the VXLAN security policy.

The controller may update the VXLAN security policy that is already sent to the network device. For example, the controller already sends the VNI and the VXLAN security policy to the network device. In a process of implementing a VXLAN by the network device, the already allocated VXLAN security policy may be updated. The update may be actively initiated by the controller, or may be initiated according to an update request sent by the network device to the controller. In addition, the update may be the update of the entire VXLAN security policy. For example, the controller sends the VNI and the updated VXLAN security policy corresponding to the VNI to the network device, and the controller updates the correspondence table of a VNI and a VXLAN security policy. After receiving the updated the VXLAN security policy, the network device replaces the VXLAN security policy with the updated the VXLAN security policy according to the VNI. Alternatively, the update may be update of partial content in the VXLAN security policy. For example, the controller needs to update the encryption range in the VXLAN security policy. It is assumed that the original encryption range in the VXLAN security policy is "payload" (as shown in FIG. 6a), and a newly defined encryption range is "inner IP header + payload" (as shown in FIG. 6b). The controller sends the VNI and the newly defined encryption range corresponding to the VNI to the network device, and the controller updates the correspondence table of a VNI and a VXLAN security policy. After receiving the newly defined encryption range, the network device replaces the original encryption range in the VXLAN security policy with the newly defined encryption range according to the VNI. The implementation achieves the following beneficial effect: The controller may flexibly deploy the VXLAN security policy, and network traffic overheads are reduced by updating partial content.

Optionally, the controller is an SDN controller.

In this application, the controller may be an SDN controller, and the SDN controller and the network device complete message exchange and information transfer by using a control channel specified in an OpenFlow protocol. In this way, a delivery mechanism of the VXLAN security policy and an SDN network may be organically integrated.

Based on the solution in this embodiment, the controller implements centralized configuration and deployment of a VXLAN security policy, encrypted data does not need to be configured at the transmit end and the receive end, and negotiation of a key and an algorithm does not need to be performed, so that configuration flexibility is improved. Moreover, the VXLAN packet is encrypted based on the VXLAN security policy, and no new packet header needs to be added. In comparison with an IPSec encryption manner, overheads of a packet header length and configuration complexity are reduced, and a broadcast function for the VXLAN packet is not affected.

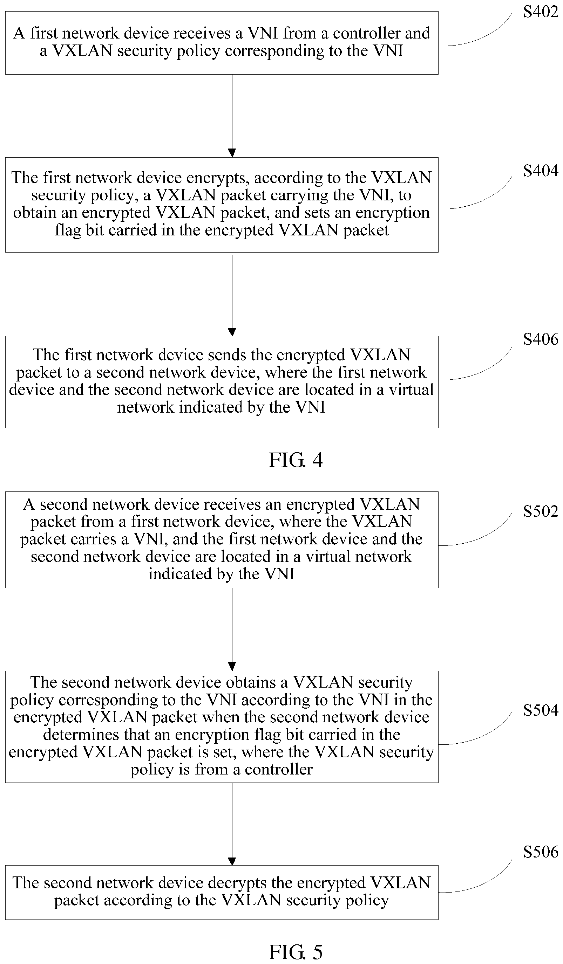

FIG. 4 is a flowchart of another encryption method for a VXLAN packet according to an embodiment of the present invention. In this embodiment of this application, the encryption method for a VXLAN packet is described from the perspective of a first network device. As shown in FIG. 4, the first network device performs the following steps.

S402: The first network device receives a VNI from a controller and a VXLAN security policy corresponding to the VNI.

In this application, after receiving a request message for requesting allocation of the VNI, the controller sends the VNI and the VXLAN security policy corresponding to the VNI to the first network device. For a manner of generating the VXLAN security policy and a manner of generating a correspondence between the VXLAN security policy and the VNI, refer to the foregoing description of the embodiment related to FIG. 3. Details are not described here again.

S404: The first network device encrypts, according to the VXLAN security policy, a VXLAN packet carrying the VNI, to obtain an encrypted VXLAN packet, and sets an encryption flag bit carried in the encrypted VXLAN packet.

S406: The first network device sends the encrypted VXLAN packet to a second network device, where the first network device and the second network device are located in a virtual network indicated by the VNI.

The first network device receives the VNI and the VXLAN security policy, and encrypts the VXLAN packet carrying the VNI according to the VXLAN security policy. An example in which the VXLAN security policy includes policy authentication data, a key, an encryption algorithm identifier, and an encryption range identifier is used below to describe an encryption process of the VXLAN packet by the first network device by applying the VXLAN security policy. It should be understood that, the VXLAN security policy does not necessarily include all of the policy authentication data, the key, the encryption algorithm, and the encryption range identifier. For example, when only one encryption algorithm is deployed in a network, an encryption algorithm identifier does not need to be used to indicate which encryption algorithm is to be used. In another example, in a network that does not have strict requirements of integrity and consistency of the VXLAN security policy, policy authentication data may not be used.

The first network device encapsulates the VXLAN packet according to the VNI, and determines whether the VXLAN security policy includes policy authentication data. When the first network device determines that the VXLAN security policy includes policy authentication data, it indicates that the VXLAN security policy is complete, and the first network device applies the VXLAN security policy an encapsulation process of the VXLAN packet. Specifically, the first network device determines a to-be-used encryption algorithm according to the encryption algorithm identifier, determines content of encrypted ciphertext according to the encryption range identifier, applies the key to the encryption algorithm, and performs encryption operation on the content determined by using the encryption range identifier, so as to generate the encrypted VXLAN packet. In addition, the encrypted VXLAN packet carries the encryption flag bit. When the encryption flag bit is set, it indicates that the VXLAN packet is an encrypted packet. The first network device sends the encrypted VXLAN packet to the second network device. An operation of setting the encryption flag bit and an operation of encrypting the VXLAN packet are not in a specific order. In an optional implementation, the encryption flag bit may be first set, and the operation of encrypting the VXLAN packet is then performed. In another optional implementation, the operation of encrypting the VXLAN packet may be first performed, and the encryption flag bit is then set.

In an optional implementation, the first network device may send an update request to the controller to request update of the VXLAN security policy. For a specific implementation process, refer to the foregoing description of the embodiment related to FIG. 3. Details are not described here again.

In an optional implementation, generation and allocation of the VNI may be completed by another device. For example, a server responsible for generating and allocating the VNI is connected to a network device. The server allocates the VNI to the network device. When the network device sends the request message to the controller, the request message carries the VNI. The controller performs a delivery process of the corresponding VXLAN security policy according to the received VNI.

Optionally, before the encrypting, by the first network device according to the VXLAN security policy, a VXLAN packet carrying the VNI, to obtain an encrypted VXLAN packet, the method further includes: determining, by the first network device, that the VXLAN security policy carries policy authentication data, where the policy authentication data is used to verify integrity of the VXLAN security policy; and the encrypted VXLAN packet sent to the second network device carries the policy authentication data.

In this application, with reference to the foregoing description in this embodiment, the first network device may determine the integrity of the VXLAN security policy according to the policy authentication data, so as to ensure that the VXLAN packet is encrypted when the VXLAN security policy is complete. That is, when determining that the VXLAN security policy carries the policy authentication data, the first network device encrypts the VXLAN packet. Correspondingly, when determining that the VXLAN security policy does not carry the policy authentication data, the first network device discards the packet, and sends a request to the controller again. Moreover, when the first network device sends the encrypted VXLAN packet to the second network device, the encrypted VXLAN packet carries the policy authentication data, as shown in FIG. 5a to FIG. 5c. An objective of such a setting is to facilitate detection of consistency of the VXLAN security policies by the second network device according to the policy authentication data.

Optionally, before the encrypting, by the first network device according to the VXLAN security policy, a VXLAN packet carrying the VNI, to obtain an encrypted VXLAN packet, the method further includes: determining, by the first network device, that the VXLAN security policy carries a policy authentication algorithm identifier, and generating policy authentication data according to the policy authentication algorithm identifier, where the policy authentication data is used to verify integrity of the VXLAN security policy; and the encrypted VXLAN packet sent to the second network device carries the policy authentication data.

In this application, an implementation in which the VXLAN security policy carries the policy authentication algorithm identifier is similar to the foregoing implementation in which the VXLAN security policy carries the policy authentication data. Details are not described here again. A difference between the implementations only lies in that the first network device needs to first generate the policy authentication data according to the policy authentication algorithm identifier.

Optionally, the VXLAN security policy includes a key, and the first network device applies the key, as a parameter, to an algorithm for generating a ciphertext.

Optionally, the VXLAN security policy includes a key generation algorithm identifier, and the first network device obtains, according to the key generation algorithm identifier, an algorithm for generating a key, generates the key according to the algorithm for generating the key, and applies the key, as a parameter, to an algorithm for generating a ciphertext.

Optionally, the VXLAN security policy further includes an encryption algorithm identifier, and the first network device obtains the algorithm for generating a ciphertext according to the encryption algorithm identifier, and encrypts, according to the algorithm for generating a ciphertext, the VXLAN packet carrying the VNI.

Optionally, the VXLAN security policy further includes an encryption range identifier, and the first network device obtains an encryption range according to the encryption range identifier, and determines to-be-encrypted content in the VXLAN packet according to the encryption range.

In this application, for the implementation in which the VXLAN security policy includes a key or a key generation algorithm identifier, an encryption algorithm identifier, and an encryption range identifier, refer to the foregoing description of the embodiment related to FIG. 3. Details are not described here again.

Optionally, the encryption flag bit is carried in a VXLAN header of the encrypted VXLAN packet.

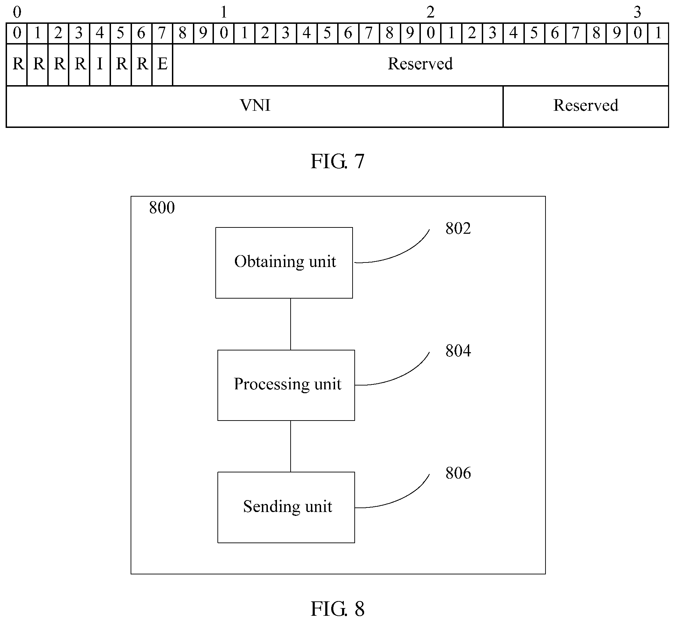

In this embodiment of this application, when encrypting the VXLAN packet according to the VXLAN security policy, the first network device sets the encryption flag bit in the VXLAN packet. When the encryption flag bit is set, it indicates that the VXLAN packet is an encrypted VXLAN packet. The encryption flag bit may be set in a format of a header of an encrypted VXLAN packet. As shown in FIG. 7, the format of the header of the encrypted VXLAN packet includes a VNI field and eight flag bits. A fifth flag bit (I) of the eight flag bits is set to 1, and the remaining flag bits (R) are set to 0. For example, an eighth flag bit may be used as the encryption flag bit, and is named E. When a value of the eighth flag bit (E) is 1, it indicates that the encryption flag bit is set, so as to indicate that the VXLAN packet is an encrypted VXLAN packet.

Optionally, before the receiving, by a first network device, a VNI from a controller and a VXLAN security policy corresponding to the VNI, the method further includes: sending, by the first network device, the request message for requesting allocation of the VNI to the controller, where the request message carries property information of the first network device.

Optionally, the request message further includes a VXLAN security policy identifier, and the VXLAN security policy identifier is used to indicate the VXLAN security policy.

For the implementation in which the first network device sends the request message to the controller and the request message includes the VXLAN security policy identifier, refer to the foregoing description of the embodiments. Details are not described here again.

Based on the solution in this embodiment, the network device encrypts the VXLAN packet based on the VXLAN security policy delivered by the controller, and negotiation of a key and an algorithm does not need to be performed between network devices that are used as a transmit end and a receive end, so that configuration flexibility is improved. The VXLAN packet is encrypted based on the VXLAN security policy. In comparison with an IPSec encryption manner, overheads of a packet header length and configuration complexity are reduced, and a broadcast function for the VXLAN packet is not affected.

FIG. 5 is a flowchart of a decryption method for an encrypted VXLAN packet according to an embodiment of the present invention. In this embodiment of this application, the decryption method for an encrypted VXLAN packet is described from the perspective of a second network device. As shown in FIG. 5, the second network device performs the following steps.

S502: The second network device receives an encrypted VXLAN packet from a first network device, where the VXLAN packet carries a VNI, and the first network device and the second network device are located in a virtual network indicated by the VNI.

S504: The second network device obtains a VXLAN security policy corresponding to the VNI according to the VNI in the encrypted VXLAN packet when the second network device determines that an encryption flag bit carried in the encrypted VXLAN packet is set, where the VXLAN security policy is from a controller.

S506: The second network device decrypts the encrypted VXLAN packet according to the VXLAN security policy.

In this application, after encrypting the VXLAN packet according to the VXLAN security policy, the first network device sends the encrypted VXLAN packet to the second network device. The second network device receives the encrypted VXLAN packet. The second network device obtains the VXLAN security policy from the controller. For the implementation, refer to the foregoing description of the embodiment related to FIG. 3. Details are not described here again. The first network device and the second network device are located in one virtual network indicated by the VNI. Further, when determining that the encrypted VXLAN packet carries an encryption flag bit that is set, the second network device decrypts the encrypted VXLAN packet according to the VXLAN security policy. An example in which the VXLAN security policy includes policy authentication data, a key, an encryption algorithm identifier, and an encryption range identifier is used below to describe a decryption process of the encrypted the VXLAN packet by the second network device by applying the VXLAN security policy. It should be understood that, the VXLAN security policy does not necessarily include all of the policy authentication data, the key, the encryption algorithm, and the encryption range identifier. For example, when only one encryption algorithm is deployed in a network, an encryption algorithm identifier does not need to be used to indicate which encryption algorithm is to be used. In another example, in a network that does not have strict requirements of integrity and consistency of the VXLAN security policy, policy authentication data may not be used.

The second network device decapsulates the encrypted VXLAN packet to obtain the VNI, and determines whether the encrypted VXLAN packet carries the encryption flag bit that is set. When determining that the encrypted VXLAN packet carries the encryption flag bit that is set, the second network device obtains the VXLAN security policy. The second network device determines whether the encrypted VXLAN packet includes policy authentication data. When determining that the encrypted VXLAN packet includes policy authentication data, the second network device matches the policy authentication data against policy authentication data in the VXLAN security policy. If the policy authentication data included in the encrypted VXLAN packet is the same as the policy authentication data in the VXLAN security policy, match succeeds, and it indicates that the VXLAN security policies used by the first network device and the second network device are consistent. The second network device determines the used encryption algorithm according to the encryption algorithm identifier, determines the content of encrypted ciphertext according to the encryption range identifier, applies the key to the encryption algorithm, and performs decryption operation on the content determined by using the encryption range identifier, so as to generate a first decrypted VXLAN packet. The decrypted VXLAN packet is the encapsulated VXLAN packet in the first network device.

Optionally, before the receiving, by the second network device, an encrypted VXLAN packet from a first network device, the method further includes: receiving, by the second network device, the VNI from the controller and the VXLAN security policy corresponding to the VNI.

When allocating the VNI to the first network device and the second network device, the controller may send the VNI and the VXLAN security policy corresponding to the VNI to the first network device and the second network device.

Optionally, the obtaining, by the second network device, a VXLAN security policy corresponding to the VNI according to the VNI in the encrypted VXLAN packet when the second network device determines that an encryption flag bit carried in the encrypted VXLAN packet is set specifically includes: when the second network device determines that the encryption flag bit carried in the encrypted VXLAN packet is set, sending a request message to the controller, where the request message carries the VNI; and receiving, by the second network device, the VNI from the controller and the VXLAN security policy corresponding to the VNI.

The second network device determines whether the encrypted VXLAN packet carries the encryption flag bit that is set. When determining that the encrypted VXLAN packet carries the encryption flag bit that is set, the second network device requests the VXLAN security policy corresponding to the VNI from the controller. The controller transfers the VXLAN security policy to the second network device according to the request and by using a unicast or multicast manner.

Optionally, before the decrypting, by the second network device, the encrypted VXLAN packet according to the VXLAN security policy, the method further includes: determining, by the second network device, that the policy authentication data carried in the encrypted VXLAN packet is the same as the policy authentication data carried in the VXLAN security policy, where the policy authentication data is used to verify consistency of the VXLAN security policies.

In this application, with reference to the foregoing description in this embodiment, the second network device may determine, according to the policy authentication data, consistency of the VXLAN security policies used by the first network device and the second network device, so as to ensure that the encrypted VXLAN packet is decrypted when the VXLAN security policies are consistent.

Optionally, before the decrypting, by the second network device, the encrypted VXLAN packet according to the VXLAN security policy, the method includes: generating, by the second network device, policy authentication data according to a policy authentication algorithm identifier carried in the VXLAN security policy, and determining that the generated policy authentication data is the same as policy authentication data carried in the encrypted VXLAN packet, where the policy authentication data is used to verify consistency of the VXLAN security policies.

In this application, an implementation in which the VXLAN security policy carries the policy authentication algorithm identifier is similar to the foregoing implementation in which the VXLAN security policy carries the policy authentication data. Details are not described here again. A difference between the implementations only lies in that the second network device needs to first generate the policy authentication data according to the policy authentication algorithm identifier.

Optionally, after the decrypting, by the second network device, the encrypted VXLAN packet according to the VXLAN security policy, the method further includes: receiving, by the second network device, the VNI from the controller and VXLAN security policy update information corresponding to the VNI; updating, by the second network device, a corresponding part of the VXLAN security policy according to the VXLAN security policy update information, to obtain an updated VXLAN security policy; and deleting, by the second network device, the VXLAN security policy after a predetermined time.

Correspondingly, the VXLAN security polices used by the first network device and the second network device may be inconsistent. For example, when the controller updates the VXLAN security policy for the first network device and the second network device, because of a network delay, a VXLAN packet encrypted by the first network device according to an original VXLAN security policy still exists on a transmit line. In a conventional manner, because the second network device already updates the VXLAN security policy, the second network device discards the remaining VXLAN packet encrypted according to the original VXLAN security policy on the transmit line. Therefore, when updating the original VXLAN security policy, the second network device saves the original VXLAN security policy for a period of time, instead of deleting the original VXLAN security policy immediately. When determining, according to the policy authentication data, that the VXLAN security policies used by the first network device and the second network device are inconsistent, the second network device decrypts the encrypted VXLAN packet according to the original VXLAN security policy. This helps resolve a problem of a packet loss of the VXLAN packet caused when the controller updates the VXLAN security policy.

Optionally, the VXLAN security policy includes a key, and the second network device applies the key, as a parameter, to a decryption algorithm.

Optionally, the VXLAN security policy includes a key generation algorithm identifier, and the second network device obtains, according to the key generation algorithm identifier, an algorithm for generating a key, generates the key according to the algorithm for generating the key, and applies the key, as a parameter, to a decryption algorithm.

Optionally, the VXLAN security policy further includes an encryption algorithm identifier, and the second network device obtains the decryption algorithm according to the encryption algorithm identifier, and encrypts the carried encrypted VXLAN packet according to the decryption algorithm.

Optionally, the VXLAN security policy further includes an encryption range identifier, and the second network device obtains an encryption range according to the encryption range identifier, and determines to-be-decrypted content in the encrypted VXLAN packet according to the encryption range.

In this application, for the implementation in which the VXLAN security policy includes a key or a key generation algorithm identifier, an encryption algorithm identifier, and an encryption range identifier, refer to the foregoing description of the embodiment related to FIG. 3. Details are not described here again.

Based on the solution in this embodiment, the network device decrypts the encrypted VXLAN packet based on the VXLAN security policy delivered by the controller, and negotiation of a key and an algorithm does not need to be performed between network devices that are used as a transmit end and a receive end, so that configuration flexibility is improved.

FIG. 8 is a schematic structural diagram of a controller 800 according to an embodiment of the present invention. The controller shown in FIG. 8 may perform the corresponding steps performed by the controller in the methods in the foregoing embodiments. As shown in FIG. 8, the controller 800 includes an obtaining unit 802, a processing unit 804, and a sending unit 806.

The obtaining unit 802 is configured to obtain a request message for requesting allocation of a VNI, where the request message carries property information of a network device.

The processing unit 804 is configured to: obtain the VNI according to the property information carried in the request message, and obtain a VXLAN security policy corresponding to the VNI, where the VXLAN security policy is used to encrypt a VXLAN packet carrying the VNI.

The sending unit 806 is configured to send the VNI and the VXLAN security policy to the network device.

Optionally, the request message further includes a VXLAN security policy identifier, the VXLAN security policy identifier is used to indicate the VXLAN security policy, and the processing unit is configured to obtain the VXLAN security policy corresponding to the VNI according to the VXLAN security policy identifier.

Optionally, the VXLAN security policy identifier includes a VXLAN security policy number, a security level identifier, or a policy type identifier.

Optionally, the processing unit 804 is further configured to: before obtaining the VNI according to the property information carried in the request message and obtaining a VXLAN security policy corresponding to the VNI, automatically generate the VXLAN security policy according to a preset policy rule.

Optionally, the VXLAN security policy includes policy authentication data or a policy authentication algorithm identifier, and the policy authentication algorithm identifier is used to indicate an algorithm for generating the policy authentication data, where the policy authentication data is used to verify integrity and consistency of the VXLAN security policy.

Optionally, the VXLAN security policy includes a key or a key generation algorithm identifier, and the key generation algorithm identifier is used to indicate an algorithm for generating the key.

Optionally, the VXLAN security policy further includes an encryption algorithm identifier, and the encryption algorithm identifier is used to indicate an algorithm for generating a ciphertext.

Optionally, the VXLAN security policy further includes an encryption range identifier, and the encryption range identifier is used to indicate content for generating a ciphertext.

Optionally, the processing unit 804 is further configured to: after the VNI and the VXLAN security policy are sent to the network device, update the VXLAN security policy, where the updating the VXLAN security policy includes updating all content of the VXLAN security policy or updating partial content of the VXLAN security policy.

Optionally, the controller is an SDN controller.

The controller shown in FIG. 8 may perform the corresponding steps performed by the controller in the methods in the foregoing embodiments. In this way, centralized configuration and deployment of a VXLAN security policy are implemented, encrypted data does not need to be configured at a transmit end and a receive end, and negotiation of a key and an algorithm does not need to be performed, so that configuration flexibility is improved. Moreover, the VXLAN packet is encrypted based on the VXLAN security policy, and an IPSec encryption manner does not need to be used, so that overheads of a packet header length and configuration complexity are reduced, and a broadcast function for the VXLAN packet is not affected.

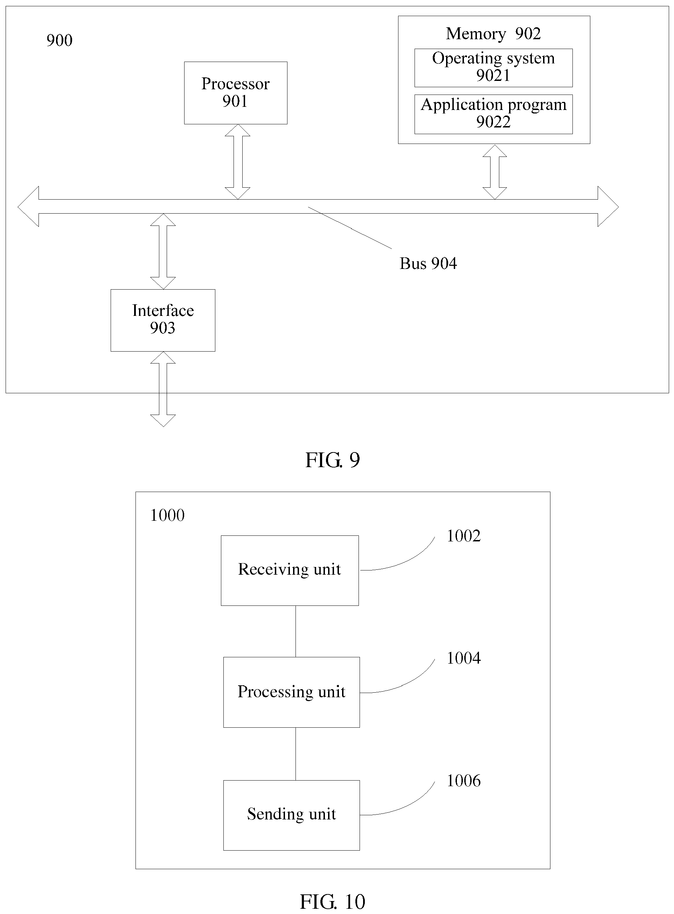

FIG. 9 is a schematic structural diagram of hardware of a controller 900 according to an embodiment of the present invention. The controller shown in FIG. 9 may perform the corresponding steps performed by the controller in the methods in the foregoing embodiments.

As shown in FIG. 9, the controller 900 includes a processor 901, a memory 902, an interface 903, and a bus 904. The interface 903 may be implemented by using a wireless or wired manner, and may be specifically, for example, a component such as a network interface card. The processor 901, the memory 902, and the interface 903 are connected by using the bus 904.

The interface 903 may specifically include a transmitter and a receiver, and is configured to transmit and receive information between the controller and the first network device in the foregoing embodiments; or configured to transmit and receive information between the controller and each of the first network device and the second network device in the foregoing embodiments. In addition, the interface 903 may be further configured to transmit and receive information between the controller and an APP device. For example, the interface 903 is configured to support the processes S302 and S306 in FIG. 3. The processor 901 is configured to perform the processing performed by the controller in the foregoing embodiments. For example, the processor 901 obtains a VNI according to a received request message, obtains a VXLAN security policy corresponding to the VNI, and sends the VNI and the corresponding VXLAN security policy to a network device by using the interface 903. Optionally, the processor 901 is further configured to: automatically generate the VXLAN security policy according to a preset policy rule, determine and record a correspondence between the VNI and the VXLAN security policy, and update the VXLAN security policy; and/or is used for other processes in the technology described in this application. For example, the processor 901 is configured to support the process S304 in FIG. 3. The memory 902 includes an operating system 9021 and an application program 9022, and is configured to store programs, code, or instructions. When executing these programs, code, or instructions, the processor or a hardware device may complete the processing processes related to the controller in FIG. 1 to FIG. 5.

It may be understood that, FIG. 9 shows only a simplified design of the controller. During actual application, the controller may include any quantity of interfaces, processors, memories, and the like, and all controllers that may implement the present invention fall within the protection scope of the present invention.

In addition, an embodiment of the present invention provides a computer storage medium. The computer storage medium is configured to store computer software instructions used by the foregoing controller. The computer software instructions include a designed program used to perform the foregoing embodiment shown in FIG. 3.

FIG. 10 is a schematic structural diagram of a first network device 1000 according to an embodiment of the present invention. The first network device shown in FIG. 10 may perform the corresponding steps performed by the first network device in the methods in the foregoing embodiments. As shown in FIG. 10, the first network device 1000 includes a receiving unit 1002, a processing unit 1004, and a sending unit 1006.

The receiving unit 1002 is configured to receive a VNI from a controller and a VXLAN security policy corresponding to the VNI.

The processing unit 1004 is configured to: encrypt, according to the VXLAN security policy, a VXLAN packet carrying the VNI, to obtain an encrypted VXLAN packet, and set an encryption flag bit carried in the encrypted VXLAN packet.

The sending unit 1006 is configured to send the encrypted VXLAN packet to a second network device, where the first network device and the second network device are located in a virtual network indicated by the VNI.

Optionally, the processing unit 1004 is further configured to: before encrypting the VXLAN packet carrying the VNI according to the VXLAN security policy and obtaining the encrypted VXLAN packet, determine that the VXLAN security policy carries policy authentication data, where the policy authentication data is used to verify integrity of the VXLAN security policy; and the encrypted VXLAN packet sent to the second network device carries the policy authentication data.

Optionally, the processing unit 1004 is further configured to: before encrypting the VXLAN packet carrying the VNI according to the VXLAN security policy and obtaining the encrypted VXLAN packet, determine that the VXLAN security policy carries a policy authentication algorithm identifier, and generate policy authentication data according to the policy authentication algorithm identifier, where the policy authentication data is used to verify integrity of the VXLAN security policy; and the encrypted VXLAN packet sent to the second network device carries the policy authentication data.

Optionally, the VXLAN security policy includes a key, and the processing unit 1004 is further configured to apply the key, as a parameter, to an algorithm for generating a ciphertext.

Optionally, the VXLAN security policy includes a key generation algorithm identifier, and the processing unit 1004 is further configured to: obtain, according to the key generation algorithm identifier, an algorithm for generating a key, generate the key according to the algorithm for generating the key, and apply the key, as a parameter, to an algorithm for generating a ciphertext.

Optionally, the VXLAN security policy further includes an encryption algorithm identifier, and the processing unit 1004 is further configured to: obtain the algorithm for generating a ciphertext according to the encryption algorithm identifier, and encrypt, according to the algorithm for generating a ciphertext, the VXLAN packet carrying the VNI.

Optionally, the VXLAN security policy further includes an encryption range identifier, and the processing unit 1004 is further configured to: obtain an encryption range according to the encryption range identifier, and determine to-be-encrypted content in the VXLAN packet according to the encryption range.

Optionally, the encryption flag bit is carried in a VXLAN header of the encrypted VXLAN packet.

Optionally, the first network device further includes: a request message sending unit, configured to: before the receiving the VNI from the controller and the VXLAN security policy corresponding to the VNI, send a request message for requesting allocation of the VNI to the controller, where the request message carries property information of the first network device.

Optionally, the request message further includes a VXLAN security policy identifier, and the VXLAN security policy identifier is used to indicate the VXLAN security policy.

The first network device shown in FIG. 10 may perform the corresponding steps performed by the first network device in the methods in the foregoing embodiments. In this way, the VXLAN packet is encrypted based on the VXLAN security policy delivered by the controller. Negotiation of a key and an algorithm does not need to be performed between network devices that are used as a transmit end and a receive end, so that configuration flexibility is improved. The VXLAN packet is encrypted based on the VXLAN security policy. In comparison with an IPSec encryption manner, overheads of a packet header length and configuration complexity are reduced, and a broadcast function for the VXLAN packet is not affected.

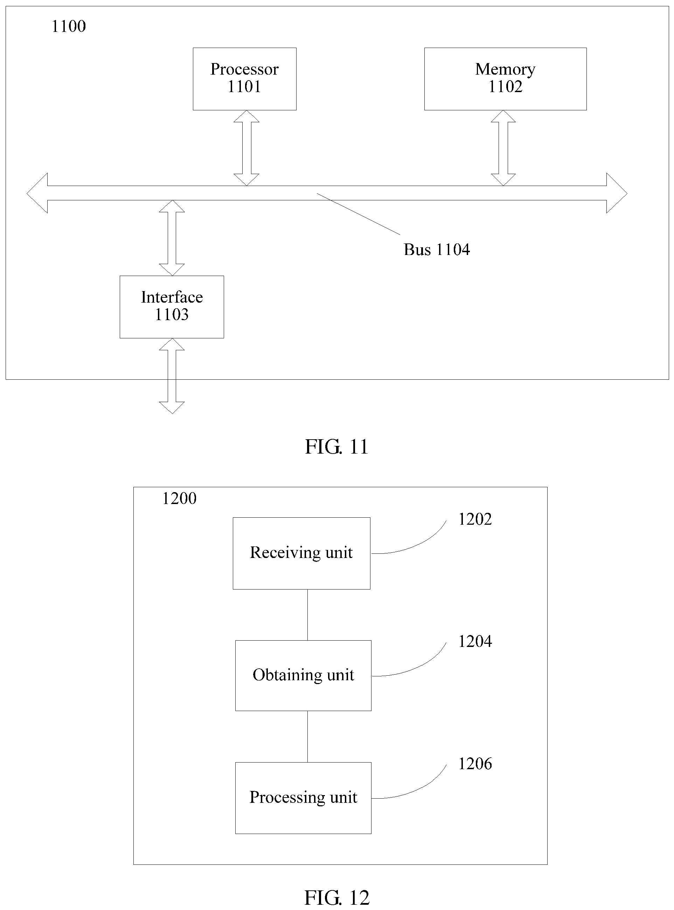

FIG. 11 is a schematic structural diagram of hardware of a first network device 1100 according to an embodiment of the present invention. The first network device shown in FIG. 11 may perform the corresponding steps performed by the first network device in the methods in the foregoing embodiments.

As shown in FIG. 11, the first network device 1100 includes a processor 1101, a memory 1102, an interface 1103, and a bus 1104. The interface 1103 may be implemented by using a wireless or wired manner, and may be specifically, for example, a component such as a network interface card. The processor 1101, the memory 1102, and the interface 1103 are connected by using the bus 1104.

The interface 1103 may specifically include a transmitter and a receiver, and is configured to transmit and receive information between the first network device and the controller in the foregoing embodiments; or is configured to transmit and receive information between the first network device and each of the controller and the second network device in the foregoing embodiments. For example, the interface 1103 is configured to support the processes S402 and S406 in FIG. 4. The processor 1101 is configured to perform the processing performed by the first network device in the foregoing embodiments. For example, the processor 1101 encrypts, according to a VNI and a VXLAN security policy corresponding to the VNI that are received by using the interface 1103, a VXLAN packet carrying the VNI, obtains an encrypted VXLAN packet, and sends the encrypted VXLAN packet to the second network device by using the interface 1103. Optionally, the processor 1101 is further configured to verify integrity of the VXLAN security policy, and/or is used for other processes in the technology described in this application. For example, the processor 1101 is configured to support the process S404 in FIG. 4. The memory 1102 is configured to store programs, code, or instructions. When executing these programs, code, or instructions, the processor or a hardware device may complete the processing processes related to the first network device in FIG. 1 to FIG. 5.

It may be understood that, FIG. 11 shows only a simplified design of the first network device. During actual application, the first network device may include any quantity of interfaces, processors, network processors, memories, and the like, and all first network devices that may implement the present invention fall within the protection scope of the present invention.

In addition, an embodiment of the present invention provides a computer storage medium. The computer storage medium is configured to store computer software instructions used by the foregoing first network device. The computer software instructions include a designed program used to perform the foregoing embodiment shown in FIG. 4.

FIG. 12 is a schematic structural diagram of a second network device 1200 according to an embodiment of the present invention. The second network device shown in FIG. 12 may perform the corresponding steps performed by the second network device in the methods in the foregoing embodiments. As shown in FIG. 12, the second network device 1200 includes a receiving unit 1202, an obtaining unit 1204, and a processing unit 1206.

The receiving unit 1202 is configured to receive an encrypted VXLAN packet from a first network device, where the encrypted VXLAN packet carries a VNI, and the first network device and the second network device are located in a virtual network indicated by the VNI.

The obtaining unit 1204 is configured to obtain a VXLAN security policy corresponding to the VNI according to the VNI in the encrypted VXLAN packet when the second network device determines that an encryption flag bit carried in the encrypted VXLAN packet is set, where the VXLAN security policy is from a controller.

The processing unit 1206 is configured to decrypt the encrypted VXLAN packet according to the VXLAN security policy.

Optionally, the receiving unit 1202 is further configured to: before receiving the encrypted VXLAN packet from the first network device, receive the VNI from the controller and a VXLAN security policy corresponding to the VNI.

Optionally, the obtaining unit 1204 includes a request message sending unit. The request message sending unit is configured to: when the second network device determines that the encryption flag bit carried in the encrypted VXLAN packet is set, send a request message to the controller, where the request message carries property information of the second network device and the VNI. The receiving unit 1202 is further configured to receive the VNI from the controller and the VXLAN security policy corresponding to the VNI.

Optionally, the processing unit 1206 is further configured to: before decrypting the encrypted VXLAN packet according to the VXLAN security policy, determine that policy authentication data carried in the encrypted VXLAN packet is the same as policy authentication data carried in the VXLAN security policy, where the policy authentication data is used to verify consistency of the VXLAN security policies.

Optionally, the processing unit 1206 is further configured to: before decrypting the encrypted VXLAN packet according to the VXLAN security policy, generate policy authentication data according to a policy authentication algorithm identifier carried in the VXLAN security policy, and determine that the generated policy authentication data is the same as policy authentication data carried in the encrypted VXLAN packet, where the policy authentication data is used to verify consistency of the VXLAN security policies.

Optionally, the processing unit 1206 is further configured to: after decrypting the encrypted VXLAN packet according to the VXLAN security policy, receive the VNI from the controller and VXLAN security policy update information corresponding to the VNI, and update a corresponding part of the VXLAN security policy according to the VXLAN security policy update information, to obtain an updated VXLAN security policy. The processing unit 1206 is further configured to delete the VXLAN security policy after a predetermined time.

Optionally, the VXLAN security policy includes a key, and the processing unit 1206 is further configured to apply the key, as a parameter, to a decryption algorithm.

Alternatively, optionally, the VXLAN security policy includes a key generation algorithm identifier, and the processing unit 1206 is further configured to: obtain, according to the key generation algorithm identifier, an algorithm for generating a key, generate the key according to the algorithm for generating the key, and apply the key, as a parameter, to a decryption algorithm.

Optionally, the VXLAN security policy further includes an encryption algorithm identifier, and the processing unit 1206 is further configured to: obtain the decryption algorithm according to the encryption algorithm identifier, and encrypt the carried encrypted VXLAN packet according to the decryption algorithm.

Optionally, the VXLAN security policy further includes an encryption range identifier, and the processing unit 1206 is further configured to: obtain an encryption range according to the encryption range identifier, and determine to-be-decrypted content in the encrypted VXLAN packet according to the encryption range.

The second network device shown in FIG. 12 may perform the corresponding steps performed by the second network device in the methods in the foregoing embodiments. In this way, a VXLAN packet is decrypted based on the VXLAN security policy delivered by the controller. Negotiation of a key and an algorithm does not need to be performed between network devices that are used as a transmit end and a receive end, so that configuration flexibility is improved.

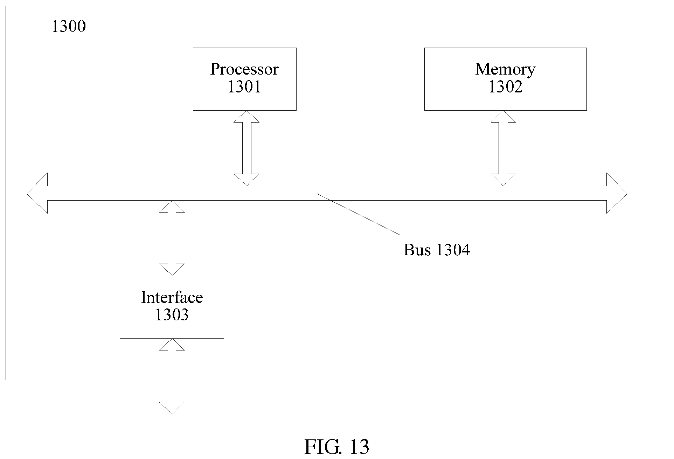

FIG. 13 is a schematic structural diagram of hardware of a second network device 1300 according to an embodiment of the present invention. The second network device shown in FIG. 13 may perform the corresponding steps performed by the second network device in the methods in the foregoing embodiments.

As shown in FIG. 13, the second network device 1300 includes a processor 1301, a memory 1302, an interface 1303, and a bus 1304. The interface 1303 may be implemented by using a wireless or wired manner, and may be specifically, for example, a component such as a network interface card. The processor 1301, the memory 1302, and the interface 1303 are connected by using the bus 1304.

The interface 1303 may specifically include a transmitter and a receiver, and is configured to transmit and receive information between the second network device and the controller in the foregoing embodiments; or is configured to transmit and receive information between the second network device and each of the controller and the first network device in the foregoing embodiments. For example, the interface 1303 is configured to support the processes S502 and S504 in FIG. 5. The processor 1301 is configured to perform the processing performed by the second network device in the foregoing embodiments. For example, the processor 1301 uses, according to a received encrypted VXLAN packet, a VXLAN security policy corresponding to a VNI in the encrypted VXLAN packet to decrypt the encrypted VXLAN packet. Optionally, the processor 1301 is further configured to: verify consistency of the VXLAN security policies according to policy authentication data, and update the VXLAN security policy; and/or is used for other processes in the technology described in this application. For example, the processor 1301 is configured to support the process S506 in FIG. 5. The memory 1302 is configured to store programs, code, or instructions. When executing these programs, code, or instructions, the processor or a hardware device may complete the processing processes related to the second network device in FIG. 1 to FIG. 5.

It may be understood that, FIG. 13 shows only a simplified design of the second network device. During actual application, the second network device may include any quantity of interfaces, processors, network processors, memories, and the like, and all second network devices that may implement the present invention fall within the protection scope of the present invention.

In addition, an embodiment of the present invention provides a computer storage medium. The computer storage medium is configured to store computer software instructions used by the foregoing second network device. The computer software instructions include a designed program used to perform the foregoing embodiment shown in FIG. 5.

In addition, an embodiment of the present invention further provides a network system. As shown in FIG. 1, the network system may include the controller provided in the foregoing embodiment corresponding to FIG. 8 or FIG. 9, the first network device provided in the embodiment corresponding to FIG. 10 or FIG. 11, and the second network device provided in the embodiment corresponding to FIG. 12 or FIG. 13. The controller, the first network device, and the second network device are not described here again.

A person of ordinary skill in the art may understand that, each aspect of the present invention or a possible implementation of each aspect may be specifically implemented as a system, a method, or a computer program product. Therefore, each aspect of the present invention or a possible implementation of each aspect may use forms of hardware only embodiments, software only embodiments (including firmware, resident software, and the like), or embodiments with a combination of software and hardware, which are generally referred to as "circuit", "module", or "system" herein. In addition, each aspect of the present invention or the possible implementation of each aspect may take a form of a computer program product, where the computer program product refers to computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (English full name: random access memory, RAM for short), a read-only memory (English full name: read-only memory, ROM for short), an erasable programmable read only memory (English full name: erasable programmable read only memory, EPROM for short or flash memory), an optical fiber, and a compact disc read only memory (English full name: compact disc read-only memory, CD-ROM for short).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be locally executed on a user computer, or some may be locally executed on a user computer as a standalone software package, or some may be executed on a local computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may in fact be executed substantially at the same time, or these blocks may sometimes be executed in reverse order.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. An encryption method for processing a virtual extensible local area network VXLAN packet, wherein the method comprises:
obtaining, by a controller, a request message for requesting allocation of a VXLAN network identifier VNI, wherein the request message carries property information of a network device;
obtaining, by the controller, the VNI according to the property information carried in the request message, and obtaining a VXLAN security policy corresponding to the VNI, wherein the VXLAN security policy is used to encrypt a VXLAN packet carrying the VNI; and
sending, by the controller, the VNI and the VXLAN security policy to the network device.

2. The method according to claim 1, wherein the request message further comprises a VXLAN security policy identifier, the VXLAN security policy identifier is used to indicate the VXLAN security policy, and the controller obtains the VXLAN security policy corresponding to the VNI according to the VXLAN security policy identifier.

3. The method according to claim 2, wherein the VXLAN security policy identifier comprises a VXLAN security policy number, a security level identifier, or a policy type identifier.

4. The method according to claim 2 or 3, before the obtaining, by the controller, the VNI according to the property information carried in the request message, and obtaining a VXLAN security policy corresponding to the VNI, comprising:
automatically generating, by the controller, the VXLAN security policy according to a preset policy rule.

5. The method according to any one of claims 1 to 4, wherein the VXLAN security policy comprises policy authentication data or a policy authentication algorithm identifier, and the policy authentication algorithm identifier is used to indicate an algorithm for generating the policy authentication data, wherein the policy authentication data is used to verify integrity and consistency of the VXLAN security policy.

6. The method according to any one of claims 1 to 5, wherein the VXLAN security policy comprises a key or a key generation algorithm identifier, and the key generation algorithm identifier is used to indicate an algorithm for generating the key.

7. The method according to claim 6, wherein the VXLAN security policy further comprises an encryption algorithm identifier, and the encryption algorithm identifier is used to indicate an algorithm for generating a ciphertext.

8. The method according to claim 6 or 7, wherein the VXLAN security policy further comprises an encryption range identifier, and the encryption range identifier is used to indicate content for generating a ciphertext.

9. The method according to any one of claims 1 to 8, wherein after the sending, by the controller, the VNI and the VXLAN security policy to the network device, the method further comprises: updating, by the controller, the VXLAN security policy, wherein the updating the VXLAN security policy comprises updating all content of the VXLAN security policy or updating partial content of the VXLAN security policy.

10. The method according to any one of claims 1 to 9, wherein the controller is an SDN controller.

11. An encryption method for processing a virtual extensible local area network VXLAN packet, wherein the method comprises:
receiving, by a first network device, a VXLAN network identifier VNI from a controller and a VXLAN security policy corresponding to the VNI;
encrypting, by the first network device according to the VXLAN security policy, a VXLAN packet carrying the VNI, to obtain an encrypted VXLAN packet, and setting an encryption flag bit carried in the encrypted VXLAN packet; and
sending, by the first network device, the encrypted VXLAN packet to a second network device, wherein the first network device and the second network device are located in a virtual network indicated by the VNI.

12. The method according to claim 11, wherein before the encrypting, by the first network device according to the VXLAN security policy, a VXLAN packet carrying the VNI, to obtain an encrypted VXLAN packet, the method further comprises: determining, by the first network device, that the VXLAN security policy carries policy authentication data, wherein the policy authentication data is used to verify integrity of the VXLAN security policy; and
the encrypted VXLAN packet sent to the second network device carries the policy authentication data.

13. The method according to claim 11, wherein before the encrypting, by the first network device according to the VXLAN security policy, a VXLAN packet carrying the VNI, to obtain an encrypted VXLAN packet, the method further comprises:
determining, by the first network device, that the VXLAN security policy carries a policy authentication algorithm identifier, and generating policy authentication data according to the policy authentication algorithm identifier, wherein the policy authentication data is used to verify integrity of the VXLAN security policy; and
the encrypted VXLAN packet sent to the second network device carries the policy authentication data.

14. The method according to any one of claims 11 to 13, wherein the VXLAN security policy comprises a key, and the first network device applies the key, as a parameter, to an algorithm for generating a ciphertext; or
the VXLAN security policy comprises a key generation algorithm identifier, and the first network device obtains, according to the key generation algorithm identifier, an algorithm for generating a key, generates the key according to the algorithm for generating the key, and applies the key, as a parameter, to an algorithm for generating a ciphertext.

15. The method according to claim 14, wherein the VXLAN security policy further comprises an encryption algorithm identifier, and the first network device obtains the algorithm for generating a ciphertext according to the encryption algorithm identifier, and encrypts, according to the algorithm for generating a ciphertext, the VXLAN packet carrying the VNI.

16. The method according to claim 14 or 15, wherein the VXLAN security policy further comprises an encryption range identifier, and the first network device obtains an encryption range according to the encryption range identifier, and determines to-be-encrypted content in the VXLAN packet according to the encryption range.

17. The method according to any one of claims 11 to 16, wherein the encryption flag bit is carried in a VXLAN header of the encrypted VXLAN packet.

18. The method according to any one of claims 11 to 17, wherein before the receiving, by a first network device, a VNI from a controller and a VXLAN security policy corresponding to the VNI, the method further comprises:
sending, by the first network device, a request message for requesting allocation of the VNI to the controller, wherein the request message carries property information of the first network device.

19. The method according to claim 18, wherein the request message further comprises a VXLAN security policy identifier, and the VXLAN security policy identifier is used to indicate the VXLAN security policy.

20. A decryption method for processing a virtual extensible local area network VXLAN packet, wherein the method comprises:
receiving, by a second network device, an encrypted VXLAN packet from a first network device, wherein the encrypted VXLAN packet carries a VXLAN network identifier VNI, and the first network device and the second network device are located in a virtual network indicated by the VNI;
obtaining, by the second network device, a VXLAN security policy corresponding to the VNI according to the VNI in the encrypted VXLAN packet when the second network device determines that an encryption flag bit carried in the encrypted VXLAN packet is set, wherein the VXLAN security policy is from a controller; and
decrypting, by the second network device, the encrypted VXLAN packet according to the VXLAN security policy.

21. The method according to claim 20, wherein before the receiving, by a second network device, an encrypted VXLAN packet from a first network device, the method further comprises:
receiving, by the second network device, the VNI from the controller and the VXLAN security policy corresponding to the VNI.

22. The method according to claim 20, wherein the obtaining, by the second network device, a VXLAN security policy corresponding to the VNI according to the VNI in the encrypted VXLAN packet when the second network device determines that an encryption flag bit carried in the encrypted VXLAN packet is set specifically comprises:
when the second network device determines that the encryption flag bit carried in the encrypted VXLAN packet is set, sending a request message to the controller, wherein the request message carries the VNI; and
receiving, by the second network device, the VNI from the controller and the VXLAN security policy corresponding to the VNI.

23. The method according to any one of claims 20 to 22, wherein before the decrypting, by the second network device, the encrypted VXLAN packet according to the VXLAN security policy, the method further comprises:
determining, by the second network device, that policy authentication data carried in the encrypted VXLAN packet is the same as policy authentication data carried in the VXLAN security policy, wherein the policy authentication data is used to verify consistency of the VXLAN security policies.

24. The method according to any one of claims 20 to 22, before the decrypting, by the second network device, the encrypted VXLAN packet according to the VXLAN security policy, comprising:
generating, by the second network device, policy authentication data according to a policy authentication algorithm identifier carried in the VXLAN security policy, and determining that the generated policy authentication data is the same as policy authentication data carried in the encrypted VXLAN packet, wherein the policy authentication data is used to verify consistency of the VXLAN security policies.

25. The method according to any one of claims 20 to 24, wherein after the decrypting, by the second network device, the encrypted VXLAN packet according to the VXLAN security policy, the method further comprises:
receiving, by the second network device, the VNI from the controller and VXLAN security policy update information corresponding to the VNI;
updating, by the second network device, a corresponding part of the VXLAN security policy according to the VXLAN security policy update information, to obtain an updated VXLAN security policy; and
deleting, by the second network device, the VXLAN security policy after a predetermined time.

26. The method according to any one of claims 20 to 25, wherein the VXLAN security policy comprises a key, and the second network device applies the key, as a parameter, to a decryption algorithm; or
the VXLAN security policy comprises a key generation algorithm identifier, and the second network device obtains, according to the key generation algorithm identifier, an algorithm for generating a key, generates the key according to the algorithm for generating the key, and applies the key, as a parameter, to a decryption algorithm.

27. The method according to claim 26, wherein the VXLAN security policy further comprises an encryption algorithm identifier, and the second network device obtains the decryption algorithm according to the encryption algorithm identifier, and encrypts the carried encrypted VXLAN packet according to the decryption algorithm.

28. The method according to claim 26 or 27, wherein the VXLAN security policy further comprises an encryption range identifier, and the second network device obtains an encryption range according to the encryption range identifier, and determines to-be-decrypted content in the encrypted VXLAN packet according to the encryption range.

29. A controller, comprising:
an obtaining unit, configured to obtain a request message for requesting allocation of a virtual extensible local area network VXLAN network identifier VNI, wherein the request message carries property information of a network device;
a processing unit, configured to: obtain the VNI according to the property information carried in the request message, and obtain a VXLAN security policy corresponding to the VNI, wherein the VXLAN security policy is used to encrypt a VXLAN packet carrying the VNI; and
a sending unit, configured to send the VNI and the VXLAN security policy to the network device.

30. The controller according to claim 29, wherein the request message further comprises a VXLAN security policy identifier, the VXLAN security policy identifier is used to indicate the VXLAN security policy, and the processing unit is configured to obtain the VXLAN security policy corresponding to the VNI according to the VXLAN security policy identifier.

31. The controller according to claim 30, wherein the VXLAN security policy identifier comprises a VXLAN security policy number, a security level identifier, or a policy type identifier.

32. The controller according to claim 30 or 31, wherein
the processing unit is further configured to: before obtaining the VNI according to the property information carried in the request message and obtaining the VXLAN security policy corresponding to the VNI, automatically generate the VXLAN security policy according to a preset policy rule.

33. The controller according to any one of claims 29 to 32, wherein the VXLAN security policy comprises policy authentication data or a policy authentication algorithm identifier, and the policy authentication algorithm identifier is used to indicate an algorithm for generating the policy authentication data, wherein the policy authentication data is used to verify integrity and consistency of the VXLAN security policy.

34. The controller according to any one of claims 29 to 33, wherein the VXLAN security policy comprises a key or a key generation algorithm identifier, and the key generation algorithm identifier is used to indicate an algorithm for generating the key.

35. The controller according to claim 34, wherein the VXLAN security policy further comprises an encryption algorithm identifier, and the encryption algorithm identifier is used to indicate an algorithm for generating a ciphertext.

36. The controller according to claim 34 or 35, wherein the VXLAN security policy further comprises an encryption range identifier, and the encryption range identifier is used to indicate content for generating a ciphertext.

37. The controller according to any one of claims 29 to 36, wherein
the processing unit is further configured to: after the VNI and the VXLAN security policy are sent to the network device, update the VXLAN security policy, wherein the updating the VXLAN security policy comprises updating all content of the VXLAN security policy or updating partial content of the VXLAN security policy.

38. The controller according to any one of claims 29 to 37, wherein the controller is an SDN controller.

39. A first network device, comprising:
a receiving unit, configured to receive a virtual extensible local area network VXLAN network identifier VNI from a controller and a VXLAN security policy corresponding to the VNI;
a processing unit, configured to: encrypt, according to the VXLAN security policy, a VXLAN packet carrying the VNI, to obtain an encrypted VXLAN packet, and set an encryption flag bit carried in the encrypted VXLAN packet; and
a sending unit, configured to send the encrypted VXLAN packet to a second network device, wherein the first network device and the second network device are located in a virtual network indicated by the VNI.

40. The first network device according to claim 39, wherein
the processing unit is further configured to: before encrypting, according to the VXLAN security policy, the VXLAN packet carrying the VNI, to obtain the encrypted VXLAN packet, determine that the VXLAN security policy carries policy authentication data, wherein the policy authentication data is used to verify integrity of the VXLAN security policy; and
the encrypted VXLAN packet sent to the second network device carries the policy authentication data.

41. The first network device according to claim 39, wherein
the processing unit is further configured to: before encrypting, according to the VXLAN security policy, the VXLAN packet carrying the VNI, to obtain the encrypted VXLAN packet, determine that the VXLAN security policy carries a policy authentication algorithm identifier, and generate policy authentication data according to the policy authentication algorithm identifier, wherein the policy authentication data is used to verify integrity of the VXLAN security policy; and
the encrypted VXLAN packet sent to the second network device carries the policy authentication data.

42. The first network device according to any one of claims 39 to 41, wherein the VXLAN security policy comprises a key, and the processing unit is further configured to apply the key, as a parameter, to an algorithm for generating a ciphertext; or
the VXLAN security policy comprises a key generation algorithm identifier, and the processing unit is further configured to: obtain, according to the key generation algorithm identifier, an algorithm for generating a key, generate the key according to the algorithm for generating the key, and apply the key, as a parameter, to an algorithm for generating a ciphertext.

43. The first network device according to claim 42, wherein the VXLAN security policy further comprises an encryption algorithm identifier, and the processing unit is further configured to: obtain the algorithm for generating a ciphertext according to the encryption algorithm identifier, and encrypt, according to the algorithm for generating a ciphertext, the VXLAN packet carrying the VNI.

44. The first network device according to claim 42 or 43, wherein the VXLAN security policy further comprises an encryption range identifier, and the processing unit is further configured to: obtain an encryption range according to the encryption range identifier, and determine to-be-encrypted content in the VXLAN packet according to the encryption range.

45. The first network device according to any one of claims 39 to 44, wherein the encryption flag bit is carried in a VXLAN header of the encrypted VXLAN packet.

46. The first network device according to any one of claims 39 to 45, further comprising: a request message sending unit, configured to: before the VNI from the controller and the VXLAN security policy corresponding to the VNI are received, send a request message for requesting allocation of the VNI to the controller, wherein the request message carries property information of the first network device.

47. The first network device according to claim 46, wherein the request message further comprises a VXLAN security policy identifier, and the VXLAN security policy identifier is used to indicate the VXLAN security policy.

48. A second network device, comprising:
a receiving unit, configured to receive an encrypted virtual extensible local area network VXLAN packet from a first network device, wherein the encrypted VXLAN packet carries a VXLAN network identifier VNI, and the first network device and the second network device are located in a virtual network indicated by the VNI;
an obtaining unit, configured to obtain a VXLAN security policy corresponding to the VNI according to the VNI in the encrypted VXLAN packet when the second network device determines that an encryption flag bit carried in the encrypted VXLAN packet is set, wherein the VXLAN security policy is from a controller; and
a processing unit, configured to decrypt the encrypted VXLAN packet according to the VXLAN security policy.

49. The second network device according to claim 48, wherein
the receiving unit is further configured to: before receiving the encrypted VXLAN packet from the first network device, receive the VNI from the controller and the VXLAN security policy corresponding to the VNI.

50. The second network device according to claim 48, wherein the obtaining unit comprises a request message sending unit, wherein
the request message sending unit is configured to: when the second network device determines that the encryption flag bit carried in the encrypted VXLAN packet is set, send a request message to the controller, wherein the request message carries the VNI; and
the receiving unit is further configured to receive the VNI from the controller and the VXLAN security policy corresponding to the VNI.

51. The second network device according to any one of claims 48 to 50, wherein
the processing unit is further configured to: before decrypting the encrypted VXLAN packet according to the VXLAN security policy, determine that policy authentication data carried in the encrypted VXLAN packet is the same as policy authentication data carried in the VXLAN security policy, wherein the policy authentication data is used to verify consistency of the VXLAN security policies.

52. The second network device according to any one of claims 48 to 50, wherein
the processing unit is further configured to: before decrypting the encrypted VXLAN packet according to the VXLAN security policy, generate policy authentication data according to a policy authentication algorithm identifier carried in the VXLAN security policy, and determine that the generated policy authentication data is the same as policy authentication data carried in the encrypted VXLAN packet, wherein the policy authentication data is used to verify consistency of the VXLAN security policies.

53. The second network device according to any one of claims 48 to 52, wherein
the processing unit is further configured to: after decrypting the encrypted VXLAN packet according to the VXLAN security policy, receive the VNI from the controller and VXLAN security policy update information corresponding to the VNI, and update a corresponding part of the VXLAN security policy according to the VXLAN security policy update information, to obtain an updated VXLAN security policy; and
the processing unit is further configured to delete the VXLAN security policy after a predetermined time.

54. The second network device according to any one of claims 48 to 53, wherein the VXLAN security policy comprises a key, and the processing unit is further configured to apply the key, as a parameter, to a decryption algorithm; or
the VXLAN security policy comprises a key generation algorithm identifier, the processing unit is further configured to: obtain, according to the key generation algorithm identifier, an algorithm for generating a key, generate the key according to the algorithm for generating the key, and apply the key, as a parameter, to a decryption algorithm.

55. The second network device according to claim 54, wherein the VXLAN security policy further comprises an encryption algorithm identifier, the processing unit is further configured to: obtain the decryption algorithm according to the encryption algorithm identifier, and encrypt the carried encrypted VXLAN packet according to the decryption algorithm.

56. The second network device according to claim 54 or 55, wherein the VXLAN security policy further comprises an encryption range identifier, and the processing unit is further configured to: obtain an encryption range according to the encryption range identifier, and determine to-be-decrypted content in the encrypted VXLAN packet according to the encryption range.

57. A system for processing a virtual extensible local area network VXLAN packet, wherein the system comprises a controller, a first network device, and a second network device, the controller is the controller in claims 29 to 38, the first network device is the first network device in claims 39 to 47, and the second network device is the second network device in claims 48 to 56.
